# EUROPÄISCHE PATENTANMELDUNG

(11) **EP 2 629 588 A1**
(43) Veröffentlichungstag der Anmeldung: **21.08.2013**
(21) Anmeldenummer: 13000725.5
(22) Anmeldetag: 13.02.2013
(51) Int. Cl.: H05B 33/08

(54) **Starterersatzmittel umfassend einen Kondensator, für eine Leuchtstofflampenfassung**

(30) Priorität: 14.02.2012 DE 102012002710; 05.03.2012 DE 102012004160; 07.03.2012 DE 102012004334; 30.01.2013 EP 13000442
(71) Anmelder: Trialed UK Ltd, London SW1E 5RS (GB)
(72) Erfinder: Wix, Markus, Buckingham Close, W51TU London (GB); Schuppener, Jörg, 44229 Dortmund (DE); Bolsius, Michiel, 32479 Hille (DE)
(74) Vertreter: Von Rohr

(57) **Zusammenfassung**

Die vorliegende Erfindung betrifft ein Starterersatzmittel (12) für eine Leuchtstofflampenfassung (23) und eine Leuchte (22) mit einer Leuchtstofflampenfassung (23). Das Starterersatzmittel (12) ist zum Einsatz in der Leuchtstofflampenfassung (23) ausgebildet. Die Leuchte (22) weist eine in die Leuchtstofflampenfassung (23) einsetzbare LED-Leuchtröhre (2), die mehrere Leuchtdioden (11) umfasst, ein Vorschaltmittel (4) zur Strombegrenzung und ein Starterersatzmittel (12) auf.

Hinsichtlich des vorschlagsgemäßen Starterersatzmittels (12) ist erfindungsgemäß vorgesehen, dass das Starterersatzmittel (12) zur Steuerung der elektrischen Leistung, insbesondere der Eingangsleistungsaufnahme, eines in die Leuchtstofflampenfassung (23) einsetzbaren Leuchtmittels, insbesondere einer LED-Leuchtröhre (2) mit mehreren Leuchtdioden (11), ausgebildet ist.

## Beschreibung

Die vorliegende Erfindung betrifft ein Starterersatzmittel für eine Leuchtstofflampenfassung gemäß dem Oberbegriff des Patentanspruchs 1, eine Ansteuerelelektronik für eine LED-Leuchtröhre, eine Leuchte gemäß dem Oberbegriff des Patentanspruchs 8 sowie ein Kit mit einem Starterersatzmittel für eine Leuchtstofflampenfassung und eine Verwendung des Starterersatzmittels und des Kits.

Starterersatzmittel der in der Rede stehenden Art werden in Leuchten mit einem röhrenförmigen Leuchtmittel eingesetzt. Röhrenförmige Leuchtmittel sind weit verbreitet zur Beleuchtung von Räumen, Hallen, Außenbereichen und dergleichen. Dies gilt insbesondere für Leuchtstofflampen.

Leuchtstofflampen gehören zu den Niederdruck-Gasentladungslampen. Als Gasentladungslampen bezeichnet man Lichtquellen, deren Wirkung auf einer Gasentladung beruht. Zum Aufbau einer Gasentladungslampe gehört ein Gasentladungsgefäß, das mit zwei Elektroden versehen und anschließend mit einem Gas oder einem Gasgemisch und optional weiteren Stoffen gefüllt wird. Wird zwischen den zwei Elektroden durch Anlegen einer bauartspezifischen Mindestspannung (Zündspannung) ein elektrisches Feld aufgebaut, kann eine Gasentladung stattfinden. Die Gasentladung in der Lampe beruht auf Ionisationsvorgängen, insbesondere Vorgängen der Stoßionisation. Durch die Stoßionisation werden Photonen emittiert und somit Licht abgestrahlt.

Eine Niederdruck-Gasentladungslampe zeichnet sich dadurch aus, dass das bei der Ionisation in den Plasmazustand übergehende Gas oder Gasgemisch einen vergleichsweise niedrigen Innendruck (typischerweise weniger als 10 mbar) im Gasentladungsgefäß hervorruft. Häufig besteht das Gasentladungsgefäß einer Niederdruck-Gasentladungslampe aus Glas.

Leuchtstofflampen sind Niederdruck-Gasentladungslampen, die - im Gegensatz zu Kaltkathodenlampen wie Leuchtröhren - direkt beheizte Glühkathoden als Elektroden verwenden. Die Glühkathoden emittieren Elektronen durch Glühemission. Durch Vorheizen der Glühkathoden wird der Wert der Zündspannung reduziert Die Füllung von Leuchtstofflampen umfasst Metalldampf, insbesondere Quecksilberdampf, sowie ein Edelgas, insbesondere Argon.

Bei der Gasentladung im Gasentladungsgefäß einer Leuchtstofflampe wird Ultraviolettstrahlung emittiert. Das Gasentladungsgefäß einer Leuchtstofflampe ist mit einem fluoreszierenden Leuchtstoff beschichtet, der im sichtbaren Spektrum zu leuchten beginnt, sobald er mit der Ultraviolettstrahlung bestrahlt wird.

Aufgrund der Stoßionisation weist das Gas oder Gasgemisch einer Leuchtstofflampe einen negativen differentiellen Innenwiderstand auf und der resultierende Strom kann sehr schnell ansteigen. Um eine Zerstörung der Leuchtstofflampe zu verhindern, wird häufig eine Strombegrenzung vorgenommen. Zur Strombegrenzung kann z. B. ein Vorschaltgerät benutzt werden. Häufig ist das Vorschaltgerät als separates Bauelement in der Leuchte angeordnet. Häufig werden magnetische Vorschaltgeräte, insbesondere konventionelle Vorschaltgeräte (KVG) und verlustarme Vorschaltgeräte (WG), eingesetzt.

Magnetische Vorschaltgeräte weisen ein induktives passives Bauelement, die sogenannte Drossel, auf. Die Drossel ist wie eine Spule aufgebaut und in Reihe zur Leuchtstofflampe geschaltet, die vorzugsweise mit Wechselstrom betrieben wird.

Magnetische Vorschaltgeräte verursachen aufgrund ihrer Induktivität Blindstrom. Daher weisen einige magnetische Vorschaltgeräte einen den Blindstrom kompensierenden Kondensator auf. Teilweise werden auch in Reihe zur Drossel geschaltete Kondensatoren eingesetzt, um die induktive Last beim Einschalten zu verringern.

Magnetische Vorschaltgeräte für Leuchtstofflampen benötigen zusätzlich einen Starter, der die Zündung der Leuchtstofflampe einleitet. Der Starter schaltet die Glühkathoden beim Start zur Vorheizung direkt in den Stromkreis. Er ist parallel zur Leuchtstofflampe angeschlossen. Typischerweise weist der Starter eine Glimmlampe, deren Elektroden als Bimetallstreifen ausgeführt sind und sich durch die Glimmentladung erwärmen, und - parallel zur Glimmlampe geschaltet - einen Kondensator auf. Dieser Kondensator begrenzt die Spannungsanstiegsgeschwindigkeit und sorgt auch bei gezündeter Leuchtstofflampe für eine Verminderung von Störemissionen der Gasentladung der Leuchtstofflampe.

Die Anordnung aus magnetischem Vorschaltgerät und Starter kann durch ein elektronisches Vorschaltgerät (EVG) ersetzt werden. Üblicherweise sind EVGs als Resonanzwandler ausgeführt.

Als Leuchtstofflampenfassung wird die mechanische Halterung einer Leuchtstofflampe bezeichnet, die auch den elektrischen Kontakt zur Spannungsquelle herstellt. Bei röhrenförmigen Leuchtstofflampen sind sowohl die Fassung (Sockel) als auch der Röhrendurchmesser standardisiert. Die relevanten Normen sind DIN EN 60081 für zweiseitig gesockelte Leuchtstofflampen und DIN EN 60901 für einseitig gesockelte Leuchtstofflampen.

Der Röhrendurchmesser wird durch den Buchstaben "T" gefolgt von einer Zahl bezeichnet, wobei die Zahl den Röhrendurchmesser als Vielfaches von einem Achtel Zoll (1/8·25,4 mm = 3,175 mm) angibt. Die weit verbreiteten T8-Röhren haben beispielsweise einen Durchmesser von 1 Zoll, was 25,4 mm entspricht. Typische Längen von T8-Röhren sind ca. 60 cm, ca. 120 cm und ca. 150 cm. Die T8-Röhren werden in einen sogenannten G13-Sockel eingesetzt.

Laut Energieverbrauchskennzeichnungsverordnung (EnVKV) ist in Deutschland u. a. für Leuchtstofflampen eine EU-Energieverbrauchskennzeichnung vorgeschrieben. Zur korrekten Kennzeichnung sind eine Reihe von EU-Richtlinien und EU-Verordnungen zu berücksichtigen, wie z. B. die EU-Richtlinien 2005/32/EG, 2009/125/EG, 98/11/EG und 92/75/EWG sowie die EU-Verordnung 244/2009. So ist beispielsweise gemäß EU-Richtlinie 98/11/EG betreffend die Energieetikettierung für Haushaltslampen die Eingangsleistungsaufnahme einer Lampe anzugeben, ausgedrückt in Watt (W), ermittelt nach in harmonisierten Normen festgelegten Prüfverfahren. Dabei ist unter dem Begriff Eingangsleistungsaufnahme die von der Lampe aufgenommene elektrische Energie pro Zeit zu verstehen, also ohne Berücksichtigung von Verlustleistung z. B. durch ein etwaiges Vorschaltgerät.

Derart gekennzeichnete Leuchtstofflampen müssen die angegebene Eingangsleistungsaufnahme auch einhalten. Dazu werden Prüfungen und Zertifizierungen durchgeführt, z. B. vom TÜV und der DEKRA, bzw. stichprobenartig durch den Gesetzgeber kontrolliert.

Bei T8-Leuchtstofflampen liegt die Eingangsleistungsaufnahme typischerweise bei 18 W bzw. 36 W bzw. 58 W bei einer Länge ca. 60 cm bzw. ca. 120 cm bzw. ca. 150 cm.

Bedingt durch die Netzfrequenz (50 bzw. 60 Hz) erlischt das Licht beim Betrieb einer Leuchtstofflampe mit konventionellem Vorschaltgerät im Bereich eines jeden Nulldurchganges. Es entstehen Hell-Dunkel-Phasen im Takt von 100 bzw. 120 Hz ("Flimmern"), die Stroboskopeffekte hervorrufen können.

Das Quecksilber in Leuchtstofflampen und deren Beschichtung sind giftig für Mensch und Umwelt. Deshalb stellt die Entsorgung von Leuchtstofflampen eine Herausforderung dar. Ferner können Leuchtstofflampen andere elektronische Vorrichtungen und Schaltungen stören.

Herkömmliche T8-Leuchtstofflampen mit einem konventionellen Vorschaltgerät haben eine Lebensdauer von ca. 6000 bis 8000 Betriebsstunden. Im industriellen Einsatz von Leuchtmitteln werden oftmals Betriebszeiten von acht oder mehr Stunden täglich erreicht. Dementsprechend ist die maximale Betriebsstundenzahl einer Leuchtstofflampe sehr schnell erreicht. Außerdem führt die hohe Betriebszeit zu einem beträchtlichen Stromverbrauch, der hohe Energie- und Wartungskosten nach sich zieht.

Um diesen Nachteilen zu begegnen, werden immer häufiger konventionelle Leuchtmittel wie Leuchtstofflampen durch Leuchtmittel mit Leuchtdioden, auch "Light-Emitting Diodes" oder LEDs genannt, ersetzt. Eine Leuchtdiode ist ein elektronisches Halbleiter-Bauelement. Fließt durch die Leuchtdiode Strom in Durchlassrichtung, so strahlt die Leuchtdiode sichtbares Licht, Infrarotstrahlung oder auch Ultraviolettstrahlung mit einer vom Halbleitermaterial und der Dotierung abhängigen Wellenlänge ab.

LEDs bieten sowohl eine vielfach längere Betriebszeit als konventionelle Leuchtmittel wie Leuchtstofflampen als auch eine wesentlich höhere Effizienz, da im Vergleich zu Leuchtstofflampen durch Leuchtmittel mit LEDs ein ähnlicher Lichtstrom bei einer um einen Faktor zwei bis zehn reduzierten Leistungsaufnahme erreicht werden kann.

Die Umstellung von Leuchtstofflampen auf Leuchtmittel mit LEDs sollte zum einen möglichst kosten- und aufwandsgünstig sein, zum anderen nicht die Gültigkeit bestehender Zertifizierungen und/oder Kennzeichnungen beeinträchtigen bzw. in Frage stellen. Insbesondere sollte die Leuchtstofflampenfassung ein vor der Umstellung existentes Prüfzeichen für Produktsicherheit (z. B. CE-Kennzeichnung und/oder GS-Zeichen) durch die Umstellung nicht verlieren. Ferner sollte es auch problemlos möglich sein, wieder auf Leuchtstofflampen wechseln zu können.

Eine derartige Umstellung ist für Leuchtstofflampen mit elektronischem Vorschaltgerät bisher nicht möglich. Die bisher dazu notwendige Umverdrahtung lässt keinen einfachen Austausch einer Leuchtstofflampe gegen ein LED-Leuchtmittel zu.

Für Leuchtstofflampen mit magnetischem Vorschaltgerät ist eine Lösungsmöglichkeit für eine solche Umstellung in der WO 2011/124670 A1 gezeigt, von der die vorliegende Erfindung ausgeht. Die WO 2011/124670 A1 offenbart eine LED-Leuchte mit einer LED-Leuchtröhre, einem Leuchtenrahmen, Mitteln zur Spannungsversorgung, einer internen Verdrahtung, einem ersten und einem zweiten Halter zur Befestigung der LED-Leuchtröhre am Leuchtenrahmen, einem Vorschaltgerät und Verbindungsmitteln eines Starters für Leuchtstofflampen. Der Leuchtenrahmen und die Verdrahtung der LED-Leuchtröhre entsprechen einem Leuchtenrahmen und der Verdrahtung für eine Leuchtstofflampe.

Ein Starter, wie er für eine Leuchtstofflampe mit magnetischem Vorschaltgerät verwendet wird, ist gemäß der WO 2011/124670 A1 durch ein Verbindungselement ersetzt. Dies ist darin begründet, dass der Starter in Verbindung mit dem Vorschaltgerät einen Zündimpuls erzeugt, der nach einem oder mehrmaligem Starten die LED-Leuchte zerstören würde. Die Verbindungsmittel des ersetzten Starters sind mit dem Verbindungselement verbunden. Das Verbindungselement ist über externe Leitungen mit dem ersten und dem zweiten Halter verbunden. Das Verbindungselement kann einen Konnektor, eine elektrische Sicherung oder einen elektrischen Leiter umfassen.

Zur Spannungsversorgung eines ersten Endes der LED-Leuchtröhre sind zwei Kontaktstifte an einem zweiten Ende der LED-Leuchtröhre kurzgeschlossen. Leuchtdioden der LED-Leuchtröhre werden nur über das erste Ende der LED-Leuchtröhre mit Spannung versorgt.

Bei eingesetztern Verbindungselement kann die bekannte LED-Leuchtröhre mittels der Halter für eine Leuchtstofflampe befestigt werden ohne Gefahr eines elektrischen Schlags. Außerdem kann die LED-Leuchtröhre in einer beliebigen Position eingesetzt werden.

Alternative Lösungen sind in der DE 20 2010 005 615 U1 und DE 20 2010 010 536 U 1 beschrieben.

Die Mittel, mit dem der Starter für eine Leuchtstofflampe ersetzt wird, werden auch als Dummy-Starter und LED-Starter bezeichnet. Im Folgenden wird für diese Mittel der Begriff Starterersatzmittel verwendet.

Beim Einsatz einer LED-Leuchtröhre in die bekannten Leuchten kann es vorkommen, dass die Eingangsleistungsaufnahme der LED-Leuchtröhre vom Nennwert (also dem Wert gemäß Kennzeichnung) abweicht, obwohl die Eingangsleistungsaufnahme der LED-Leuchtröhre bei direktem Netzanschluss dem Nennwert entspricht. Ursachen für die Abweichung können in der Wechselwirkung von Komponenten der LED-Leuchtröhre mit anderen Elementen der bekannten Leuchten, wie z. B. dem magnetischen Vorschaltgerät, liegen.

Dies trifft insbesondere auf LED-Leuchtröhren zu, wie sie in den Anmeldungen DE 10 2012 000 973.9 und DE 10 2012 002 710.9 beschrieben sind.

Ein Aspekt der vorliegenden Erfindung bezieht sich auf eine LED-Leuchtröhre mit mindestens einer ersten Platine und mehreren Leuchtdioden, die von der ersten Platine getragen sind. Ferner weist bzw. nimmt die LED-Leuchtröhre eine Ansteuerelektronik zur Versorgung der Leuchtdioden auf, die vorzugsweise zum Betrieb mit Netzspannung ausgebildet ist. Ein Anschlussmittel ist vorgesehen, um die Ansteuerelektronik an Netzspannung anzuschließen.

Beim Einsatz derartig aufgebauter LED-Leuchtröhren in den bekannten Leuchten kann durch die Kondensatoren der Ansteuerelektronik und der Induktivität (Drossel) des magnetischen Vorschaltgeräts ein elektrischer Schwingkreis, insbesondere ein elektrischer Reihenschwingkreis, gebildet werden.

Ein elektrischer Schwingkreis ist eine resonanzfähige elektrische Schaltung aus einer Spule und einem Kondensator, die elektrische Schwingungen ausführen kann. Dabei wird Energie zwischen dem magnetischen Feld der Spule und dem elektrischen Feld des Kondensators periodisch ausgetauscht, wodurch abwechselnd eine hohe Stromstärke oder eine hohe Spannung vorliegen. Ein derartiger elektrischer Schwingkreis kann die Eingangsleistungsaufnahme der LED-Leuchtröhre in unvorhergesehener oder ungewollter Weise beeinflussen.

Ferner lässt sich die Eingangsleistungsaufnahme der bekannten LED-Leuchtröhren über externe Dimmer steuern. Solche Dimmer steuern dabei zweckmäßigerweise die Eingangsleistungsaufnahme mehrerer LED-Leuchtröhren gleichzeitig. Die Nachrüstung solcher Dimmer für vorhandene Leuchten ist aufwendig und teuer.

Eine Aufgabe der vorliegenden Erfindung ist es, eine Vorrichtung für eine Leuchtstofflampenfassung, eine Ansteuerelektronik eine Leuchte mit einer Leuchtstofflampenfassung sowie ein Kit bereitzustellen und eine Verwendung anzugeben, welche die zuvor geschilderten Nachteile des Standes der Technik zumindest weitgehend vermeiden oder aber wenigstens abschwächen, insbesondere ohne die Ungültigkeit bestehender Zertifizierungen und Kennzeichnungen hervorzurufen und/oder ohne die Leuchtstofflampenfassung und/oder eine in die Leuchtstofflampenfassung einsetzbare LED-Leuchtröhre technisch zu verändern.

Die obige Aufgabe wird durch ein Starterersatzmittel gemäß Anspruch 1, durch eine Ansteuerelektronik gemäß Anspruch 6 durch eine Leuchte gemäß Anspruch 8, durch ein Kit gemäß Patentanspruch 10 und eine Verwendung gemäß Anspruch 15 gelöst. Vorteilhafte Weiterbildungen sind Gegenstand der Unteransprüche.

Es versteht sich von selbst, dass Ausgestaltungen, Ausführungsformen, Vorteile u. dgl., welche nachfolgend zu Zwecken der Vermeidung von Wiederholungen nur zu einem Erfindungsaspekt angeführt sind, in Bezug auf die übrigen Erfindungsaspekte entsprechend gelten.

Dies vorausgeschickt, wird im Folgenden die vorliegende Erfindung näher beschrieben.

Gemäß einem ersten Gegenstand der vorliegenden Erfindung ist das Starterersatzmittel, das zum Einsatz in einer Leuchtstofflampenfassung ausgebildet ist, zur Steuerung der elektrischen Leistung, insbesondere der Eingangsleistungsaufnahme, eines in die Leuchtstofflampenfassung einsetzbaren Leuchtmittels ausgebildet. Als Leuchtmittel wird dabei vorzugsweise eine LED-Leuchtröhre mit mehreren Leuchtdioden eingesetzt.

Ein Grundgedanke der vorliegenden Erfindung besteht darin, die Steuerung der elektrischen Leistung des Leuchtmittels in das Starterersatzmittel zu integrieren. Durch diese grundlegende technische Veränderung des Starterersatzmittels kann die elektrische Leistung individuell für das Leuchtmittel angepasst bzw. kalibriert werden, ohne die Gültigkeit bestehender Zertifizierungen und Kennzeichnungen für das Leuchtmittel oder die Leuchtstofflampenfassung zu beeinträchtigen bzw. in Frage zu stellen.

Weder die Leuchtstofflampenfassung noch das Leuchtmittel bedürfen einer technischen Veränderung. Die Verwendung eines vorschlagsgemäßen Starterersatzmittels verursacht keinen zusätzlichen Aufwand für den Nutzer. Das Starterersatzmittel erlaubt eine kompakte Bauform des Leuchtmittels und der Leuchtstofflampenfassung. Ferner ermöglicht das Starterersatzmittel eine kostengünstige und einfache Installation des Leuchtmittels.

Das Starterersatzmittel eignet sich insbesondere für eine Leuchte mit einer Leuchtstofflampenfassung, wobei als Leuchtmittel der Leuchte eine LED-Leuchtröhre mit mehreren Leuchtdioden eingesetzt wird. Hierbei ist besonders vorteilhaft, dass bei einer Umstellung des Leuchtmittels der Leuchte von einer Leuchtstofflampe auf eine LED-Leuchtröhre der Ablauf der Umstellung unverändert ist. Statt des bekannten Starterersatzmittels wird einfach das vorschlagsgemäße Starterersatzmittel verwendet und gegen den Starter der Leuchtstofflampe ausgetauscht.

Mit dem erfindungsgemäßen Starterersatzmittel kann beim Einsatz einer LED-Leuchtröhre als Leuchtmittel in den bekannten Leuchten eine Abweichung der Eingangsleistungsaufnahme der LED-Leuchtröhre vom Nennwert kompensiert werden.

Das erfindungsgemäße Starterersatzmittel kann in einer Vielzahl von Richtungen ausgestaltet und weitergebildet sein. Dazu darf auf die diesbezüglichen Unteransprüche verwiesen werden.

Ein weiterer Gegenstand der vorliegenden Erfindung ist eine Leuchte mit einer Leuchtstofflampenfassung, mit einer in die Leuchtstofflampenfassung einsetzbaren LED-Leuchtröhre, die mehrere Leuchtdioden aufweist, mit einem Vorschaltmittel zur Strombegrenzung und mit einem bevorzugt vorschlagsgemäßen Starterersatzmittel.

Gemäß einem Aspekt der vorliegenden Erfindung, der auch unabhängig realisiert werden kann, ist bei der Leuchte das Starterersatzmittel wie das erfindungsgemäße Starterersatzmittel ausgebildet. Die Leuchte ermöglicht einen einfachen und kostengünstigen Einsatz der LED-Leuchtröhre statt eines Leuchtmittels wie einer Leuchtstofflampe. Darüber hinaus kann die Leuchte die zuvor geschilderten Vorteile des erfindungsgemäßen Starterersatzmittels ausnutzen.

Die erfindungsgemäße Leuchte kann in einer Vielzahl von Richtungen ausgestaltet und weitergebildet sein. Dazu darf auf den diesbezüglichen Unteranspruch bzw. dessen einzelne Alternativen verwiesen werden.

Ein weiterer Aspekt der vorliegenden Erfindung, der auch unabhängig realisiert werden kann, betrifft eine Ansteuerelektronik für ein Leuchtmittel, insbesondere eine LED-Leuchtröhre, mit einem Konstantstromregler, der dazu ausgebildet ist, mit Leuchtdioden der LED-Leuchtröhre eine Reihenschaltung, im Folgenden Lastschleife genannt, zu bilden und mit einem bevorzugt vorschlagsgemäßen Starterersatzmittel, das einen Teil der Ansteuerelektronik bildet.

Ein weiterer Aspekt betrifft ein längliches bzw. röhrenförmiges Leuchtmittel, insbesondere eine LED-Röhre, mit mehreren in Reihe geschalteten Leuchtdioden getragen von einer Platine, mit einer Ansteuerelektronik zur Versorgung der Leuchtdioden und mit einem Anschlussmittel zum Anschluss der Ansteuerelektronik an Netz-spannung. Die Ansteuerelektronik weist einen Konstantstromregler auf, der mit den in Reihe geschalteten Leuchtdioden eine Reihenschaltung, im Folgenden Lastschleife genannt, bildet. Alternativ oder zusätzlich ist die Ansteuerelektronik transformatorfrei, (drossel-)spulenfrei und/oder zumindest ausgangsseitig ausschließlich mit nicht-(nass-)elektrolytischen Kondensatoren aufgebaut.

Gemäß einem Aspekt der vorliegenden Erfindung wird die Reihenschaltung aus dem Konstantstromregler und einer Mehrzahl von Leuchtdioden verwendet. Diese auch Lastschleife genannte Reihenschaltung kann mit verhältnismäßig hohen Spannungen betrieben werden, was den Einsatz eines Transformators erübrigen kann. So kann eine ausgesprochen kompakte Bauform bei gleichzeitig geringer Verlustleistung erreicht werden.

Beispielsweise kann eine Betriebsspannung der Lastschleife zumindest im Wesentlichen einer Summe der Flussspannungen der in Reihe geschalteten Leuchtdioden und der Betriebs- bzw. Nennspannung des Konstantstromreglers und/oder mehr als 20 % vorzugsweise mehr als 40 %, insbesondere mehr als 50 % der gleichgerichteten und geglätteten bzw. effektiven Nennspannung entsprechen.

Es kann vorgesehen sein, dass sich die an der Lastschleife anliegende Spannung über deren Elemente, also zumindest über den Konstantstromregler und die mit diesem in Reihe geschalteten Leuchtdioden, aufteilt. Hierbei ist es bevorzugt, dass die Lastschleife derart ausgebildet ist, dass an dem Konstantstromregler lediglich ein geringer Anteil der gesamten an der Lastschleife anliegenden Spannung abfällt. Dieser Anteil liegt vorzugsweise unter 50 %, weiter vorzugsweise unter 30 %, insbesondere unter 20 % und besonders bevorzugt unter 10 % oder 8 %. Insbesondere entsprechen die Flussspannungen der in Reihe geschalteten Leuchtdioden mehr als 50 %, weiter bevorzugt mehr als 70 %, vorzugsweise mehr als 80 % und besonders bevorzugt mehr als 90 % oder 94 % der an der Lastschleife anliegenden Spannung. Ein Abfall eines lediglich geringen Anteils der gesamten Spannung an dem Konstantstromregler ermöglicht eine minimale verbleibende Verlustleistung in dem Konstantstromregler.

Die Ansteuerelektronik kann Kondensatoren aufweisen und insbesondere zumindest ausgangsseitig ausschließlich mit nicht-elektrolytischen Kondensatoren wie Keramikschichtkondensatoren, Folienschichtkondensatoren oder dergleichen aufgebaut sein.

In einem Aspekt der vorliegenden Erfindung kann vorgesehen sein, dass die Lastschleife über einen Gleichrichter mit gleichgerichteter Netzspannung versorgt wird. Hierbei kann es sich bevorzugt um einen Halbleiter- und/oder Brückengleichrichter handeln. Die Leuchtdioden werden zur gleichmäßigen Lichtabgabe bevorzugt mit Gleichspannung oder einer vorzugsweise geglätteten gleichgerichteten Wechselspannung bzw. mit einem Gleichstrom oder einem vorzugsweise geglätteten gleichgerichteten Strom versorgt. Auch der Stromregler ist vorzugsweise zum Betrieb mit einer Gleichspannung bzw. Gleichstrom ausgebildet. Der Einsatz eines Gleichrichters bzw. Brückengleichrichters ermöglicht es in vorteilhafter Weise, die Lastschleife mit Gleichspannung bzw. Gleichstrom zu versorgen. Verbleibende Welligkeit der gleichgerichteten Spannung bzw. des gleichgerichteten Stroms wird vorzugsweise durch den Konstantstromregler ausgeglichen bzw. ausgeregelt, und/oder durch einen Kondensator, insbesondere eine Kondensatorbank, geblockt.

Gemäß einem auch unabhängig realisierbaren Aspekt der vorliegenden Erfindung kann der Gleichrichter zur Versorgung mit Netzspannung kapazitiv mit dem Anschlussmittel gekoppelt sein, vorzugsweise ausschließlich mit einem oder auch mehreren nicht-(nass-)elektrolytischen Kondensatoren. Dieser Kondensator kann in dem eingangs beschriebenen Starkerersatzmittel angeordnet oder diesem zugeordnet sein. Insbesondere kann vorgesehen sein, dass die kapazitive Kopplung des Gleichrichters mit der Netzspannung bzw. mit dem Anschlussmittel zum Verbinden der Ansteuerelektronik mit dem Stromnetz als kapazitiver Vorwiderstand fungiert. Es kann also vorgesehen sein, dass der Kapazitätswert eines die kapazitive Kopplung bildenden Kondensators derart ausgebildet ist, dass betriebsmäßig ein Spannungsabfall an diesem Kondensator resultiert, vorzugsweise wodurch die Spannungsamplitude an dem Gleichrichter bzw. die Spannung an der Lastschleife einstellbar ist.

Insbesondere weist dieser Kondensator einen Blindwiderstand bei Netzfrequenz, beispielsweise zwischen und/oder bei zumindest im Wesentlichen 50 Hz oder 60 Hz, derart auf, dass die Spannung an der Lastschleife auf zumindest im Wesentlichen die Summe der Flussspannungen der zur Bildung der Lastschleife in Reihe geschalteten Leuchtdioden und der Nennspannung des Stromreglers reduziert wird. Hierzu kann vorgesehen sein, dass der Kondensator, der zur elektrischen Verbindung des Gleichrichters mit dem Anschlussmittel ausgebildet ist, eine betriebsmäßig an einem Eingang des Gleichrichters anliegende Spannung auf weniger als 80 %, vorzugsweise weniger als 70 %, insbesondere weniger als 50 % und/oder mehr als 10 %, vorzugsweise mehr als 20 %, insbesondere mehr als 30 % einer an dem Anschlussmittel anliegenden Netzspannung reduziert bzw. einen entsprechenden Spannungsabfall zwischen seinen Klemmen hervorruft. Hierdurch ist es möglich, auch nur wenige in Reihe geschaltete Dioden Leuchtdioden und/oder mehrere Lastschleifen mit nur wenigen in Reihe geschalteten Dioden parallel zu betreiben, insbesondere mit höchstens 20, vorzugsweise weniger als 15, in Reihe geschalteten Dioden. Dies ist der Ausfallsicherheit zuträglich. Netzspannung im Sinne der vorliegenden Erfindung ist vorzugsweise eine zumindest im Wesentlichen sinusförmige Wechselspannung von vorzugsweise mehr als 100 V, beispielsweise etwa 110 V oder 230 V.

Da durch den Blindwiderstand der Kapazität keine zusätzlichen Verluste erzeugt werden, anders als bei ohmschen Widerständen, kann mit der bevorzugten kapazitiven Kopplung, auch kapazitiver Vorwiderstand genannt, zwischen Anschlussmittel und Gleichrichter in vorteilhafter Weise ein ausgesprochen effizientes Leuchtmittel mit geringer Wärmeentwicklung realisiert werden.

Ein Blindwiderstand im Sinne der vorliegenden Erfindung ist vorzugsweise ein zumindest im Wesentlichen imaginärer Widerstand im Sinne der Wechselstromrechnung, auch Reaktanz genannt. Der Einsatz eines Blindwiderstandes, insbesondere einer Kapazität, ermöglicht in vorteilhafter Weise eine Spannungsreduktion, ohne dass hierbei größere Mengen an Wärme bzw. Verlustleistung entstehen.

Es ist möglich, dass parallel zu den in Reihe geschalteten Leuchtdioden mindestens ein vorzugsweise nicht-elektrolytischer Kondensator vorgesehen ist. Hierdurch ist es möglich, den betriebsmäßig durch die Leuchtdioden fließenden Strom zu glätten und/oder eine gleichmäßigere Lichtabgabe des Leuchtmittels zu erzielen.

Die Ansteuerelektronik kann mehrere Konstantstromregler aufweisen, die vorzugsweise eingangsseitig elektrisch leitend miteinander verbunden sind. Insbesondere können die Konstantstromregler gemeinsam mit Strom versorgt werden. Es ist möglich, dass mehrere Lastschleifen jeweils mit einem Konstantstromregler in Reihenschaltung mit mehreren Leuchtdioden vorgesehen sind. Alternativ oder zusätzlich ist es möglich, dass die Konstantstromregler lastseitig elektrisch leitend miteinander verbunden sind. Hierdurch kann eine größere Stromstärke durch die Leuchtdioden erreicht bzw. geregelt werden.

Ferner ist es möglich, dass die Lastschleife über einen Widerstand mit dem Gleich-richter verbunden ist. Dies kann einer Kurschlussspannungsfestigkeit des Leuchtmittels und/oder der Stromsteuerung durch den Konstantstromregler zuträglich sein.

Der Konstantstromregler ist vorzugsweise dazu ausgebildet, einen Strom durch die Leuchtdioden der Lastschleife zumindest im Wesentlichen konstant zu halten, insbesondere mit Abweichungen von einem Sollwert für den Strom durch die Leuchtdioden geringer als 30 %, vorzugsweise geringer als 20 %, insbesondere geringer als 10 %. Der Sollwert für den Strom durch die Leuchtdioden ist bevorzugt größer als 10 mA, insbesondere mehr als 120 mA und/oder geringer als 1 A, insbesondere geringer als 500 mA. Dies ist der Lebensdauer der Leuchtdioden zuträglich.

Zur Regelung des Stroms durch die Leuchtdioden kann der Konstantstromregler mit dem Widerstand verbunden sein, insbesondere wobei der Widerstand als Shuntwiderstand verwendet wird. Alternativ oder zusätzlich kann vorgesehen sein, dass eine an dem Widerstand abfallende Spannung als Regelgröße für die Stromregelung durch den Konstantstromregler verwendet wird. Alternativ oder zusätzlich kann ein Steuereingang des Konstantstromreglers, insbesondere mittels eines Vorwiderstands, mit dem Ausgang des Konstantstromreglers elektrisch leitend verbunden. Das an dem Steuereingang anliegende Signal bzw, der anliegende Pegel kann zur Stromregelung des Konstantstromreglers verwendet werden. Es sind aber auch alternative oder zusätzliche Funktionen des Widerstands und/oder alternative Regelkonzepte für den Strom für bzw. durch die Leuchtdioden bzw. für den Konstantstromregler möglich.

Im Sinne der vorliegenden Erfindung ist der Ausgang des Konstantstromreglers vorzugsweise den insbesondere in Reihe geschalteten Leuchtdioden zugewandt bzw. mit diesen elektrisch leitend verbunden. Der Eingang des Konstantstromreglers kann dem Gleichrichter zugewandt bzw. mit diesem elektrisch leitend verbunden sein.

In einem weiteren, auch unabhängig realisierbaren Aspekt der vorliegenden Erfindung ist die Ansteuerelektronik, die vorzugsweise mit Netzspannung versorgt wird, bevorzugt transformatorfrei, also ohne Transformatoren aufgebaut. In vorteilhafter Weise ist es durch den vorschlagsgemäßen transformatorfreien Aufbau der Ansteuerelektronik bzw. des Leuchtmittels möglich, Verlustleistung bzw. Wärmeentwicklung zu vermeiden oder zu reduzieren. Entsprechendes kann für Schaltnetzteile gelten, die ebenfalls üblicherweise mit Transformatoren, Übertragern und/oder (Drossel-) Spulen aufgebaut sind, was hier bevorzugt vermieden wird, um die Verlustleistung zu verringern.

Zudem sind Transformatoren bzw. Spulen durch den Wicklungsprozess aufwendig und teuer in der Herstellung und bedingen einen hohen Platzbedarf im Gehäuse von Leuchtmitteln, Der transformatorfreie bzw. spulenfreie Aufbau der Ansteuerelektronik ermöglicht also ein kostengünstigeres, kompakteres Leuchtmittel.

Unter dem Begriff "Transformator" werden im Sinne der vorliegenden Erfindung vorzugsweise jegliche gekoppelte Induktivitäten, insbesondere auch gekoppelte Spulen oder Übertrager, verstanden.

Gemäß einem weiteren Aspekt der vorliegenden Erfindung, der auch unabhängig realisiert werden kann, ist die Ansteuerelektronik ausschließlich mit nicht-elektrolytischen oder zumindest mit nicht-nass-elektrolytischen Kondensatoren aufgebaut. Elektrolytkondensatoren, insbesondere nass-elektrolytische Kondensatoren, sind prinzipiell dafür bekannt, dass sie sich durch eine hohe Kapazitätsdichte bei geringen kapazitätsbezogenen Kosten auszeichnen und werden daher zur Spannungsstabilisierung in Netzteilen nahezu ausschließlich eingesetzt. Elektrolytkondensatoren sind dadurch gekennzeichnet, dass eine Energiespeicherung zumindest teilweise elektrochemisch erfolgt, wobei bei nass-elektrolytischen Kondensatoren ein zumindest teilweise flüssiges Elektrolyt eingesetzt wird.

Die vorliegende Erfindung überwindet das Vorurteil, dass Elektrolytkondensatoren generell für Netzfilter, also als Kapazitäten zum Dämpfen von Netzfrequenzen, ein optimales Kosten-Nutzenverhältnis darstellen und aufgrund der hohen benötigten Kapazität alternativlos sind. Denn vorschlagsgemäß sind in der Ansteuerelektronik auch Netzfilter oder sonstige Kapazitäten zumindest ausgangsseitig vorzugsweise frei von (nass-)elektrolytischen Kondensatoren. Es hat sich nämlich überraschend gezeigt, dass die Laufzeitverlängerungen und Verbesserungen der Zuverlässigkeit des elektrolytkondensatorfreien Leuchtmittels die möglicherweise höheren initialen Kosten bei Einsatz nicht-elektrolytischer Kondensatoren bei Leuchtmitteln mit LEDs überkompensieren können. Dadurch, dass die Leuchtdioden im Vergleich zu anderen Mitteln zur Lichterzeugung eine wesentlich längere Lebensdauer aufweisen, kann der Ausfall von Elektrolytkondensatoren in bekannten Leuchtmitteln einen limitierenden Faktor für die Laufzeit des Leuchtmittels darstellen. Daher kann in synergistischer Weise die Kombination von nicht-(nass-)elektrolytischen Kondensatoren in der Ansteuerelektronik mit Leuchtdioden zur Lichterzeugung zu einer signifikant verlängerten Laufzeit des gesamten Leuchtmittels führen.

Ferner ist ein Grund für einen Ausfall von Leuchtmitteln das Austrocknen des Elektrolyts von Elektrolytkondensatoren. Die Austrocknung von Elektrolytkondensatoren wird mit erhöhter Temperatur wesentlich beschleunigt. Die verringerte Verlustleistung durch Einsatz einer transformatorfreien Ansteuerelektronik ist also der Lebensdauer der Ansteuerelektronik bei Einsatz von Elektrolytkondensatoren zuträglich. Die Lebensdauer von Elektrolytkondensatoren stellt jedoch weiterhin oftmals die laufzeitbegrenzende Größe für das Leuchtmittel dar, weshalb eine elektrolytkondensatorfreie Ansteuerelektronik, zumindest jedoch eine Ansteuerelektronik ohne nass-elektrolytische Kondensatoren und/oder ausgangsseitig ohne insbesondere nass-elektrolytische Kondensatoren, bevorzugt ist Demnach ist der transformatorfreie Aufbau der Ansteuerelektronik auch vorteilhaft, wenn Elektrolytkondensatoren eingesetzt werden.

Ein weiterer, auch unabhängig realiserbarer Aspekt der vorliegenden Erfindung betrifft ein Kit mit mindestens einer in eine Leuchtstofflampenfassung einsetzbaren LED-Leuchtröhre, die mehrere Leuchtdioden aufweist, und mit mindestens einem, vorzugsweise mindestens zwei, Starterersatzmitteln ausgebildet zum Einsatz in der Leuchtstofflampenfassung, wobei das Starterersatzmittel zur Einstellung bzw. die Starterersatzmittel zu unterschiedlicher Einstellung der elektrischen Leistung, insbesondere der Eingangsleistungsaufnahme, der LED-Leuchtröhre ausgebildet sind.

Mit dem vorschlagsgemäßen Kit lässt sich einerseits sicherstellen, dass zueinander passende, aufeinander abgestimmte und/oder eine funktionstüchtige Ansteuerelektronik ergebende Kombination aus Starterersatzmittel und LED-Leuchtröhre verwendet werden. Dadurch, dass bei dem vorschlagsgemäßen Kit mehrere Starterersatzmittel mit unterschiedlichen Eigenschaften enthalten sein können, wird ermöglicht, dass durch die Wahl eines bestimmten der dem Kit enthaltenden Starterersatzmittel die beabsichtigte Leistung der LED-Leuchtröhre gewählt werden kann. Durch die Kit-Bildung ist auch hier sichergestellt, dass die unterschiedlichen möglichen Kombinationen aus LED-Leuchtröhre und Starterersatzmittel jeweils voll funktionsfähig sind und zudem mögliche Fehlfunktionen verhindert werden können.

Es kann vorgesehen sein, dass die Starterersatzmittel vorzugsweise ausschließlich nicht-elektrolytische Kondensatoren mit unterschiedlichen Werten und/oder mit zwischen Kontaktstiften unterschiedliche Kapazitätswerten aufweisen.

Ferner kann vorgesehen sein, dass die Leuchtdioden über die Ansteuerelektronik versorgt werden, die zu einem Teil in der LED-Leuchtröhre, zu einem anderen Teil in dem Starterersatzmittel angeordnet ist, so dass die Eigenschaften der Ansteuerelektronik, vorzugsweise in Bezug auf die Steuerung der elektrischen Leistung der LED-Leuchtröhre, durch die Wahl eines der unterschiedlichen Starterersatzmittel einstellbar bzw. wählbar ist.

In einem weiteren Aspekt sind die unterschiedlichen Starterersatzmittel unterschiedlich, bevorzugt durch unterschiedlich farbige Kennzeichnungsmittel, unterscheidbar, vorzugsweise wobei die Starterersatzmittel Gehäuseaußenseiten oder Gehäuse unterschiedlicher Farbe aufweisen.

Zur verbesserten Handhabbarkeit können unterschiedliche Starterersatzmittel des Kits unterschiedliche Gehäusefarben aufweisen oder auf andere Weise möglichst unterscheidbar gekennzeichnet sein. Die Kennzeichnung kann die Gehäuse der Starterersatzmittel zumindest im Wesentlichen oder zumindest auf der den Kontaktstiften abgewandten Stirnseite bedecken, was diese auch auf Baustellen auf den ersten Blick voneinander unterscheidbar macht. Auch eine Kontrolle der Wahl des richtigen Starterersatzmittels ist hierdurch aus größerer Distanz möglich. Insbesondere kann vorgesehen sein, dass ein Starterersatzmittel des Kits, das bei Einsatz mit der Leuchtröhre zu der höchsten Leistungsaufnahme im Vergleich zu Leistungsaufnahmen bei Einsatz der Leuchtröhre mit anderen der im Kit enthaltenen Starterersatzmittel führt, rot gekennzeichnet ist. Alternativ oder zusätzlich ist es möglich, dass ein Starterersatzmittel des Kits, das bei Einsatz mit der Leuchtröhre zu der geringsten Leistungsaufnahme im Vergleich zu Leistungsaufnahmen bei Einsatz der Leuchtröhre mit anderen der im Kit enthaltenen Starterersatzmittel führt, grün gekennzeichnet ist; und/oder dass ein Starterersatzmittel des Kits, das bei Einsatz mit der Leuchtröhre zu der zweithöchsten Leistungsaufnahme im Vergleich zu Leistungsaufnahmen bei Einsatz der Leuchtröhre mit anderen der im Kit enthaltenen Starterersatzmittel führt, orange gekennzeichnet ist. Weiter ist es möglich, dass ein Starterersatzmittel des Kits, das bei Einsatz mit der Leuchtröhre zu der zweitniedrigsten Leistungsaufnahme im Vergleich zu Leistungsaufnahmen bei Einsatz der Leuchtröhre mit anderen der im Kit enthaltenen Starterersatzmittel führt, blau gekennzeichnet ist.

Ein Starterersatzmittel des Kits, das dazu ausgebildet ist, diejenige Änderung der elektrischen Leistung des Leuchtmittels zu kompensieren, die durch elektrisches Verbinden eines der Strombegrenzung dienenden Vorschaltmittels der Leuchtstofflampenfassung mit einer der Versorgung des Leuchtmittels dienenden Ansteuerelektronik hervorgerufen wird, kann mit einer weiteren anderen Farbe gekennzeichnet sein, beispielsweise gelb. Alternativ oder zusätzlich kann ein solches Starterersatzmittel mit zwei unterschiedlichen Farben oder sonstigen Kennzeichnungsmitteln gekennzeichnet sein, von denen eines zu der Leistungsaufnahme bei Betrieb mit dem zugeordneten Leuchtmittel und das andere zu der Funktion korrespondiert, die Wirkung des Vorschaltmittels zu berücksichtigen bzw. zu kompensieren. Ein solches Starterersatzmittel des Kits kann beispielsweise rot-gelb gestreift sein. Es sind aber auch andere Farben, Farbsysteme oder Kennzeichnungsmittel einzeln und in Kombination zur Kennzeichnung und besseren Unterscheidbarkeit der Starterersatzmittel des Kits möglich.

Das vorschlagsgemäße Starterersatzmittel und/oder Kit kann zur Einstellung und/oder Auswahl der elektrischen Leistung, insbesondere der Eingangsleistungsaufnahme, einer LED-Leuchtröhre verwendet werden. Vorschlagsgemäß können also die dem Kit beigefügten Komponenten verwendet werden, indem sie mit oder mittels einer Fassung derart verbunden werden, dass die Leistung der LED-Leuchtröhre über den Einsatz eines bestimmten der Startersatzmittel ausgewählt werden kann. Alternativ oder zusätzlich zur Auswahl eines bestimmten der Starterersatzmittels können ein oder mehrere einstellbare Starterersatzmittel verwendet werden.

Weitere Aspekte, Vorteile und Eigenschaften der vorliegenden Erfindung ergeben sich aus den Patentansprüchen.

Die Erfindung wird nachfolgend anhand der Erläuterung eines bevorzugten Ausführungsbeispiels mit Bezugnahme auf die Zeichnung näher erläutert. Die oben beschriebenen und/oder in den Ansprüchen und/oder in der nachfolgenden Figurenbeschreibung offenbarten Merkmale können bedarfsweise miteinander kombiniert werden, auch wenn dies nicht im Einzelnen ausdrücklich beschrieben ist.

In der Zeichnung zeigt
- Fig. 1: schematisch eine Schaltanordnung gemäß dem Stand der Technik mit einer bekannten LED-Leuchtröhre, einem Verbindungselement und einem Vorschaltmittel;
- Fig. 2: schematisch eine vereinfachte Schaltanordnung einer Ausführungsform eines erfindungsgemäßen Starterersatzmittets;
- Fig. 3: schematisch den Aufbau eines erfindungsgemäßen Starterersatzmittels ohne ein Gehäuse gemäß einer zweiten Ausführungsform;
- Fig. 4: schematisch eine Frontansicht einer erfindungsgemäßen Leuchte;
- Fig. 5: ein schematisches Schaltbild einer vorschlagsgemäßen Ansteuerelektronik; und
- Fig. 6: eine vereinfachte Darstellung eines vorschlagsgemäßen Kits.

Im Folgenden werden für gleiche oder ähnliche Elemente dieselben Bezugszeichen verwendet, wobei sich gleiche oder ähnliche Vorteile und Eigenschaften ergeben können, auch wenn von einer wiederholten Beschreibung abgesehen worden ist.

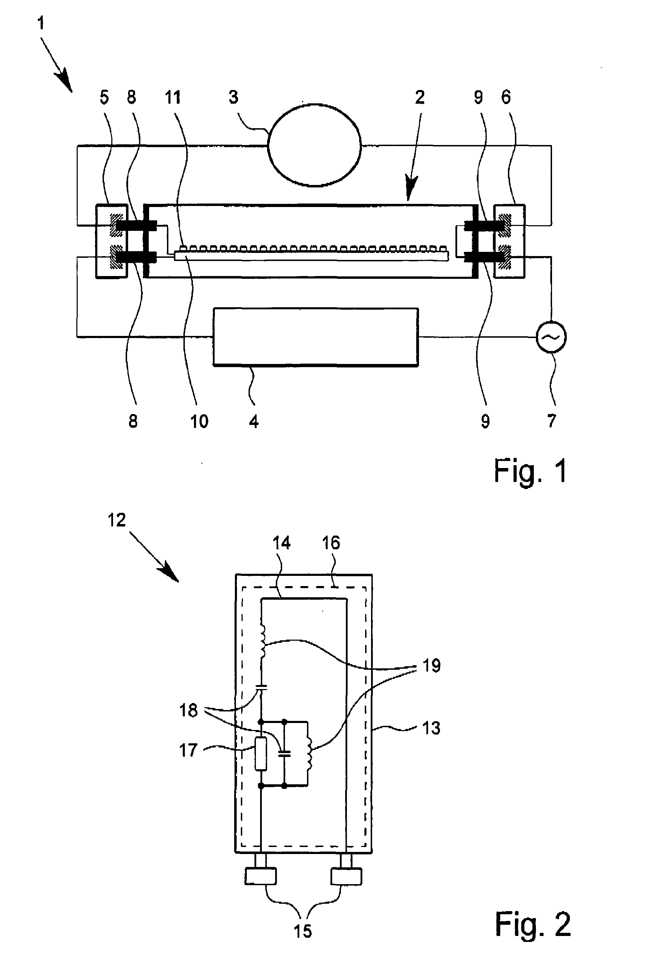

Fig. 1 illustriert schematisch und in vereinfachter Form eine aus dem Stand der Technik an sich bekannte Schaltanordnung 1 für eine in eine Leuchtstofflampenfassung einsetzbare LED-Leuchtröhre 2. Die Schaltanordnung 1 weist ein aus dem Stand der Technik bekanntes Verbindungselement 3 und ein aus dem Stand der Technik bekanntes Vorschaltmittel 4 auf.

Das Verbindungselement 3 ist verbunden mit einem ersten Halter 5 und einem zweiten Halter 6, die beide zur Befestigung der LED-Leuchtröhre 2 an einem nicht dargestellten Leuchtenrahmen dienen. Das Verbindungselement 3 ist also parallel zur LED-Leuchtröhre 2 geschaltet. Das Verbindungselement 3 kann einen Konnektor, eine elektrische Sicherung und/oder einen elektrischen Leiter umfassen.

Zur Spannungsversorgung eines ersten Endes der LED-Leuchtröhre 2 mittels einer Spannungsquelle 7, die einen Wechselstrom einspeist, sind zwei Kontaktstifte 8 an einem zweiten Ende der LED-Leuchtröhre 2 kurzgeschlossen. An dem ersten Ende der LED-Leuchtröhre 2 sind zwei Kontaktstifte 9 mit einer Platine 10 verbunden, die mehrere Leuchtdioden 11 der LED-Leuchtröhre 2 trägt. Die Leuchtdioden 11 werden also nur über das erste Ende der LED-Leuchtröhre 2 mit Spannung versorgt.

Zwischen der Spannungsquelle 7 und dem ersten Ende der LED-Leuchtröhre 2 ist das Vorschaltmittel 4 angeordnet bzw. verdrahtet. Somit ist das Vorschaltmittel 4 in Reihe zur LED-Leuchtröhre 2 geschaltet.

Nach der vorliegenden Erfindung wird statt des Verbindungselements 3 ein vorschlagsgemäßes Starterersatzmittel 12 verwendet.

Fig. 2 zeigt schematisch ein vorschlagsgemäßes Starterersatzmittel 12 gemäß einem ersten Ausführungsbeispiel. Das Starterersatzmittel 12 weist ein Gehäuse 13 zum Schutz einer im Starterersatzmittel 12 angeordneten Steuerelektronik 14 auf. Die Steuerelektronik 14 ist mit zwei Kontaktstiften 15 verbunden, die an dem Gehäuse 13 befestigt sind.

Die Kontaktstifte 15 dienen insbesondere zur Aufnahme des Starterersatzmittels 12 in die Leuchtstofflampenfassung. Das Starterersatzmittel 12 wird zum Ersatz eines Starters für eine Leuchtstofflampe verwendet. Entsprechend sind die Bauformen und Anschlüsse des Starterersatzmittels 12 vorzugsweise kompatibel zu den Schnittstellen der Leuchtstofflampenfassung.

Die Steuerelektronik 14, vorzugsweise elektrisch verbunden mit den Kontaktstiften 15, kann einen Widerstand 17 als ein Bauelement der Steuerelektronik 14 aufweisen. Parallel zum Widerstand 17 kann ein Kondensator 18 und/oder eine Spule 18 geschaltet sein. Darüber hinaus kann ein weiterer Kondensator 18 und/oder eine weitere Spule 18 in Reihe zum Widerstand 17 geschaltet.

Die Steuerelektronik 14 ist auf einer Platine 16 des Starterersatzmittels 12 angeordnet, insbesondere aufgelötet. Die Platine 16 ist in Fig. 2 gestrichelt angedeutet.

Die Steuerelektronik 14 kann weitere Widerstände 17, Kondensatoren 18 und/oder Spulen 19 aufweisen. Vorzugsweise handelt es sich bei den Kondensatoren 18 um nicht-elektrolytische Kondensatoren.

Elektrolytkondensatoren, insbesondere nass-elektrolytische Kondensatoren, sind prinzipiell dafür bekannt, dass sie sich durch eine hohe Kapazitätsdichte bei geringen kapazitätsbezogenen Kosten auszeichnen und werden daher zur Spannungsstabilisierung in Netzteilen nahezu ausschließlich eingesetzt. Elektrolytkondensatoren sind dadurch gekennzeichnet, dass eine Energiespeicherung zumindest teilweise elektrochemisch erfolgt, wobei bei nass-elektrolytischen Kondensatoren ein zumindest teilweise flüssiges Elektrolyt eingesetzt wird.

Die vorliegende Erfindung überwindet das Vorurteil, dass Elektrolytkondensatoren generell für Netzfilter, also als Kapazitäten zum Dämpfen von Netzfrequenzen, ein optimales Kosten-Nutzenverhältnis darstellen und aufgrund der hohen benötigten Kapazität alternativlos sind. Denn vorschlagsgemäß sind in der Steuerelektronik 14 auch Netzfilter oder sonstige Kapazitäten zumindest ausgangsseitig vorzugsweise frei von (nass-)elektrolytischen Kondensatoren. Es hat sich nämlich überraschend gezeigt, dass die Laufzeitvelängerungen und Verbesserungen der Zuverlässigkeit der elektrolytkondensatorfreien Steuerelektronik 14 die möglicherweise höheren initialen Kosten bei Einsatz nicht-elektrolytischer Kondensatoren überkompensieren können, insbesondere bei Einsatz des Starterersatzmittels 12 in Leuchten mit einer LED-Leuchtröhre 2 mit mehreren Leuchtdioden 11.

Dadurch, dass die Leuchtdioden 11 im Vergleich zu anderen Mitteln zur Lichterzeugung eine wesentlich längere Lebensdauer aufweisen, kann der Ausfall von Elektrolytkondensatoren in bekannten Leuchtmitteln einen limitierenden Faktor für die Laufzeit des Leuchtmittels darstellen. Daher kann in synergetischer Weise die Kombination von nicht-(nass-)elektrolytischen Kondensatoren in der Steuerelektronik 14 mit Leuchtdioden zur Lichterzeugung zu einer signifikant verlängerten Laufzeit des gesamten Leuchtmittels führen.

Ferner ist ein Grund für einen Ausfall von Schaltungen das Austrocknen des Elektrolyts von Elektrolytkondensatoren. Die Austrocknung von Elektrolytkondensatoren wird mit erhöhter Temperatur wesentlich beschleunigt. Die Lebensdauer von Elektrolytkondensatoren stellt oftmals die die Laufzeit begrenzende Größe für eine Schaltung dar, weshalb eine elektrolytkondensatorfreie Steuerelektronik 14, zumindest jedoch eine Steuerelektronik 14 ohne nass-elektrolytische Kondensatoren und/oder ausgangsseitig ohne insbesondere nass-elektrolytische Kondensatoren, bevorzugt ist.

Eine Steuerelektronik 14, die zumindest ausgangsseitig ausschließlich mit nicht-elektrolytischen Kondensatoren aufgebaut ist, ist besonders vorteilhaft, da hierdurch die Wärmeentwicklung beim Betrieb des Starterersatzmittels 12 so weit gesenkt werden kann, dass ein Einsatz auch sehr temperaturempfindlicher Materialien möglich ist bzw. die Lebensdauer des Starterersatzmittels 14 durch die verringerte Wärmeentwicklung stark verbessert werden kann.

Vorzugsweise sind die Widerstände 17, Kondensatoren 18 und/oder die Spulen 19 als SMD-Bauelemente ausgeführt. Dabei bezeichnet die Abkürzung SMD (surfacemounted device) ein oberflächenmontiertes elektrisches Bauelement. SMD-Bauelemente haben im Gegensatz zu Bauelementen der Durchsteckmontage (Through Hole Technology, THT) keine Drahtanschlüsse, sondern werden mittels lötfähiger Anschlussflächen direkt auf eine Leiterplatte gelötet.

Vorzugsweise ist die Steuerelektronik 14 derart ausgebildet ist, dass die elektrische Leistung des Leuchtmittels einstellbar bzw. adaptierbar ist. Die Begriffe "einstellbar" und "adaptierbar", wie sie im Rahmen der vorliegenden Erfindung verwendet werden, sind so zu verstehen, dass die elektrische Leistung des Leuchtmittels bei Betrieb des Leuchtmittels gezielt und für einen Nutzer oder Monteur nachvollziehbar verändert werden kann.

Die Möglichkeit zur Einstellung der elektrischen Leistung des Leuchtmittels ist also eine Alternative zu nicht im Betrieb einstellbaren, für den Betrieb mit einem bestimmten Leuchtmittel in einer Leuchtstofflampenfassung vorher abgestimmten Starterersatzmitteln 12.

Unter "einstellbar" bzw. "adaptierbar" soll aber auch ein einmaliges Einstellen bzw. Adaptieren, vorzugsweise auch durch Voreinstellungen etc., verstanden werden.

Zur Einstellung der elektrischen Leistung des Leuchtmittels kann ein nicht dargestelltes Einstellelement verwendet werden. Die Einstellung erfolgt vorzugsweise werkzeuglos, z. B. durch drehen, schieben oder klicken. Es kann auch vorgesehen sein, dass das Starterersatzmittel 12 eine Ratsche zur Einstellung der elektrischen Leistung des Leuchtmittels aufweist. Alternativ oder zusätzlich können mehrere unterschiedliche Starterersatzmittel 12 bereitgestellt werden, wobei die Einstellung durch Wahl eines der Starterersatzmittel 12 erfolgen kann.

Die Einstellung der elektrische Leistung des Leuchtmittels kann stufig, z. B. über ein Einstellelement mit drei Stufen oder durch unterschiedliche Starterersatzmittel 12, oder stufenlos erfolgen.

Vorzugsweise ist die Steuerelektronik 14 derart ausgebildet, dass mittels Einstellung der elektrischen Leistung des Leuchtmittels der Lichtstrom einstellbar ist. Dadurch kann die elektrische Leistung des Leuchtmittels optisch wahrnehmbar eingestellt werden. Außerdem kann somit die Leuchtdichte bzw. die Helligkeit des Leuchtmittels individuell eingestellt werden.

Diese bevorzugte Ausführungsform ermöglicht es, flexibel und präzise eine gewünschte Leuchtdichtenverteilung einzustellen. So kann es z. B. die elektrische Leistung von Leuchtmitteln, die in der Nähe von anderen Lichtquellen, beispielsweise in der Nähe von Außenfenstem oder dergleichen, angeordnet sind, geringer eingestellt werden im Vergleich zu Leuchtmitteln, die an dunkleren Orten angeordnet sind.

Vorzugsweise ist die Steuerelektronik 14 derart ausgebildet ist, dass mittels Einstellung der elektrischen Leistung des Leuchtmittels der Lichtstrom in einem Bereich von 0 % bis 150 % des nominellen Lichtströms einstellbar ist. Dabei entspricht der nominelle Lichtstrom dem Lichtstrom laut Kennzeichnung des Leuchtmittels ohne Einstellbarkeit. Besonders bevorzugt ist es, wenn mittels Einstellung der elektrischen Leistung des Leuchtmittels der Lichtstrom in einem Bereich von 100 % bis 140 % des nominellen Lichtstroms einstellbar ist.

Ein derartig einstellbares Leuchtmittel kann beispielsweise statt mehrerer separater Leuchtmittel mit fixem Lichtstrom (z. B. in einer Basisausführung, einer High-Lumen-Ausführung und einer Ultra-High-Lumen-Ausführung) verwendet werden.

Ferner kann eine derartig ausgebildete Steuerelektronik 14 zur Dimmung des Leuchtmittels benutzt werden. Vorteilhafterweise kann mit einem erfindungsgemäßen Starterersatzmittel 12 in dieser Ausführungsform das Leuchtmittel individuell mittels des Starterersatzmittels 12, also an der Leuchte selbst, gedimmt werden. Ein Nachrüsten des Starterersatzmittels 12 ist einfach und kostengünstig realisierbar. Insbesondere erfordert das Nachrüsten des Starterersatzmittels 12 kein Verlegen von Kabeln.

Vorzugsweise ist das Starterersatzmittel 12 derart ausgebildet ist, dass das Starterersatzmittel 12 diejenige Änderung der elektrischen Leistung des Leuchtmittels kompensiert, die durch elektrisches Verbinden des der Strombegrenzung dienenden Vorschaltmittels 4 der Leuchtstofflampenfassung und einer der Versorgung insbesondere einer Gasentladungslampe dienenden Elektronik des Leuchtmittels und/Oder einer Fassung bzw. Lampe hervorgerufen wird.

Beim Einsatz eines Leuchtmittels in die Leuchte kann durch die Kondensatoren der Elektronik und/oder die Induktivität (Drossel) des Vorschaltmittels 4 ein elektrischer Schwingkreis, insbesondere ein elektrischer Reihenschwingkreis, gebildet werden.

Das erfindungsgemäße Starterersatzmittel 12 kann nun derart ausgebildet sein, dass das Starterersatzmittel 12 die durch den elektrischen Schwingkreis verursachte Änderung der Eingangsleistungsaufnahme des Leuchtmittels kompensiert.

Es hat sich ferner als vorteilhaft erwiesen, wenn das Starterersatzmittel 12 eine Versorgung der Ansteuerelektronik des Leuchtmittels mit Netzspannung, also einen Anschluss an das Stromnetz, ermöglicht.

Netzspannung im Sinne der vorliegenden Erfindung ist eine Spannung, die beispielsweise zwischen 80 und 800 V, insbesondere bei 230 V, 380 V oder 110 V Wechselstrom liegen kann und/oder über die Hausinstallation o. dgl. zur Verfügung steht. Es ist also bevorzugt, dass das Starterersatzmittel 12 einen Betrieb des Leuchtmittels am öffentlichen Stromnetz erlaubt.

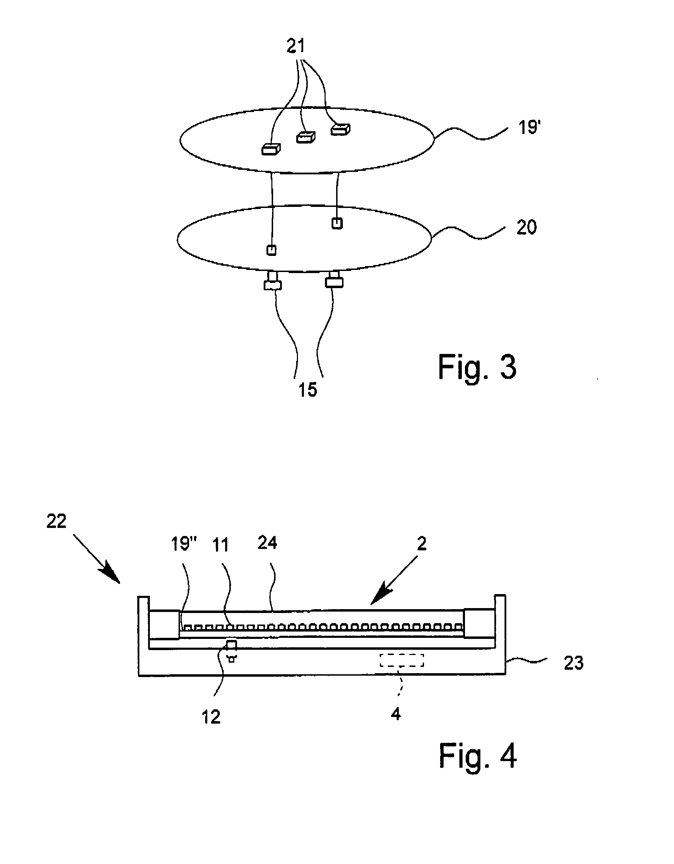

Fig. 3 zeigt schematisch den Aufbau einer zweiten Ausführungsform eines erfindungsgemäßen Starterersatzmittels 12 ohne das Gehäuse 13.

Das Starterersatzmittel 12 gemäß der in Fig. 3 dargestellten Ausführung weist einen Gehäuseboden 20 und eine Platine 19' auf. Auf der Platine 19' sind drei gleiche oder unterschiedliche elektrische Bauelemente 21 angeordnet. Die Bauelemente 21 können z. B. Kondensatoren, Widerstände und Spulen umfassen. Diese Ausführungsform ermöglicht eine kompakte Bauform des Starterersatzmittels 12.

Fig. 4 zeigt schematisch eine Frontansicht einer erfindungsgemäßen Leuchte 22.

Die Leuchte 22 kann eine Leuchtstofflampenfassung 23, eine in die Leuchtstofflampenfassung 23 einsetzbare LED-Leuchtröhre 2, die mehrere Leuchtdioden 11 aufweist, ein Vorschaltmittel 4 zur Strombegrenzung und/oder ein Starterersatzmittel 12 aufweisen.

Das Starterersatzmittel 12 ist wie das zuvor beschriebene erfindungsgemäße Starterersatzmittel 12 ausgebildet.

Vorzugsweise weist die LED-Leuchtröhre 2 mindestens eine erste Platine 19" auf, die die Leuchtdioden 11 trägt.

Es hat sich ferner als vorteilhaft erwiesen, wenn die LED-Leuchtröhre 2 eine Ansteuerelektronik zur Versorgung der Leuchtdioden 11 aufweist. Dabei ist es bevorzugt, dass die LED-Leuchtröhre 2 ein nicht dargestelltes Anschlussmittel zum Anschluss der Ansteuerelektronik an Netzspannung aufweist. Ferner ist es bevorzugt, dass die erste Platine 19" die Ansteuerelektronik oder zumindest wesentliche Teile der Ansteuerelektronik trägt. Vorzugsweise ist die Ansteuerelektronik transformatorlos und/oder zumindest ausgangsseitig ausschließlich mit nicht-elektrolytischen Kondensatoren aufgebaut.

Vorzugsweise ist die LED-Leuchtröhre 2 kabelfrei ausgebildet.

Die LED-Leuchtröhre 2 weist bevorzugt ein vorzugsweise röhrenförmiges Gehäuse 24 und/oder eine zumindest im Wesentlichen transparente bzw. lichtdurchlässige Abdeckung des Gehäuses 24 auf, das/die besonders bevorzugt Polymethylmethacrylat (PMMA) aufweist/aufweisen oder zumindest im Wesentlichen aus PMMA besteht/bestehen.

Eine PMMA-Abdeckung zeichnet sich durch eine herausragende Transmissionseigenschaft für sichtbares Licht aus, weist eine hohe UV-Beständigkeit und gute Stoßeigenschaften auf und vergilbt im Gegensatz zu üblichen Abdeckungen aus Polycarbonat nicht. Bisher wird Polycarbonat wegen seiner höheren Temperaturbeständigkeit eingesetzt, hat jedoch schlechtere Transmissionseigenschaften und vergilbt bereits nach kurzer Zeit. Mit einer PMMA-Abdeckung lässt sich folglich eine stoßfeste LED-Leuchtröhre 2 mit verbesserter UV-Beständigkeit realisieren, deren Leuchtkraft und Effizienz aufgrund verbesserter Transmissionseigenschaften der Abdeckung verbessert ist und deren Funktion zudem nicht aufgrund von Vergilbungseffekten mit der Zeit degradiert wird. Durch Einsatz der Abdeckung aus PMMA kann also die Effizienz der LED-Leuchtröhre 2 dadurch verbessert werden, dass durch die herausragenden Transmissionseigenschaften der Abdeckung abgestrahlte Lichtleistung vergrößert werden kann.

Eine Voraussetzung ist jedoch, dass die Temperatur der LED-Leuchtröhre 2 gering genug gehalten werden kann, dass ein Einsatz von PMMA möglich ist. Eine aktive Kühlung und/oder eine vergrößerte Kühloberfläche des Gehäuses 24 sind zwar möglich, bedeuten jedoch einen hohen zusätzlichen Material- und Arbeitsaufwand. Die vorliegende Erfindung bevorzugt stattdessen oder zusätzlich eine LED-Leuchtröhre 2 mit einer transformatorfreien und/oder zumindest ausgangsseitig ausschließlich mit nicht-elektrolytischen Kondensatoren aufgebauten Ansteuerelektronik. Hierdurch kann die Wärmeentwicklung in der LED-Leuchtröhre 2 so weit reduziert werden, dass keine zusätzlichen Kühloberflächen benötigt werden. Eine Kombination der Abdeckung aus PMMA mit der Ansteuerelektronik, die transformatorfrei ist und/oder zumindest ausgangsseitig ausschließlich mit nicht-elektrolytischen Kondensatoren aufgebaut ist, ist also besonders vorteilhaft, da hierdurch eine sowohl besonders sparsame als auch besonders helle LED-Leuchtröhre 2 ermöglicht wird.

Eine zweite Abdeckung kann mit der lichtdurchlässigen Abdeckung verbunden sein, insbesondere klemmend und/oder rastend bzw. formschlüssig und/oder kraftschlüssig. Die zweite Abdeckung ist bevorzugt aus einem wärmeableitenden Material, insbesondere Aluminium, Stahl oder dergleichen, kann aber auch PMMA und/oder Polycarbonat (PC) aufweisen oder hieraus bestehen. Ferner kann die zweite Abdeckung Riefen, Wülste oder Kühlrippen aufweisen, insbesondere außenseitig und/oder längs zum Gehäuse 24, um die Wärmeableitung in die Umgebung zur Kühlung der LED-Leuchtröhre 2 zu fördern.

Gemäß einem weiteren, auch unabhängig realisierbaren Aspekt der vorliegenden Erfindung kann das gesamte Gehäuse 24 - mit der ersten und/oder der zweiten Abdeckung - aus Kunststoff, insbesondere PMMA und/oder Polycarbonat, bestehen oder PMMA bzw. Polycarbonat aufweisen. Dies erlaubt eine besonders robuste LED-Leuchtröhre 2, die auch in mehrere Richtungen gleichzeitig Licht emittieren oder dicht gegenüber Wasser oder sonstigen Chemikalien sein kann. Dessen ungeachtet ist auch der Einsatz jeglichen anderen Kunststoffs oder eines Metalls oder sonstigen Materials möglich.

Der Einsatz von PMMA für das vorzugsweise gesamte Gehäuse 24 ist besonders bevorzugt, da mit PMMA eine LED-Leuchtröhre 2 ermöglicht wird, die zumindest im Wesentlichen nicht vergilbt und/oder UV beständig ist. Es kann vorgesehen sein, dass das Gehäuse 24 metallfrei und/oder kühlrippenfrei ist.

Im Vergleich zu einer herkömmlichen Leuchtstofflampe bietet die erfindungsgemäße Leuchte 22 folgende Vorteile:
- Stromeinsparung von bis zu ca. 85 %,
- deutlich geringere Einschaltverzögerung (Anlaufzeit bis zur Erreichung von 60 % des nominellen Lichtstroms < 1 s),
- höhere Lichtausbeute (bis zu ca. 105 Lumen/W)
- bis zu 85% recyclebar,
- längere Lebensdauer (typischerweise 50000 Betriebsstunden),
- kein Flackern, kein Brummen, kein Stroboskop-Effekt,
- geringerer Leuchtkraftverlust (Lichtstrom zum Ende der Lebensdauer > 89%),
- kein Sonderbetriebsstoff enthalten.

Im Folgenden wird zwischen den Begriffen Steuerelektronik 14 und Ansteuerelektronik differenziert. Die Steuerelektronik 14 bildet vorzugsweise Teil der Ansteuerelektronik. Die Ansteuerelektronik kann dafür ausgebildet sein, einen Betrieb von Leuchtdioden, insbesondere von Leuchtdioden 11 der LED-Röhre 2, eine Netz-spannung zu ermöglichen. Die Steuerelektronik 14 kann ein dem Starterersatzmittel 12 zugeordneter, insbesondere in diesem angeordneter Teil der Ansteuerelektronik sein. Die Ansteuerelektronik kann zumindest teilweise in dem Starterersatzmittel 12 angeordnet oder diesem zugeordnet sein. Ferner können die nun im Folgenden erläuterte Ansteuerelektronik und die Steuerelektronik 14 des Starterersatzmittels 12 auch einzeln und unabhängig realisiert werden. Es ist besonders bevorzugt, dass die Ansteuerelektronik mittels der Steuerelektronik 14 einstellbar ist. Insbesondere kann vorgesehen sein, dass durch die Wahl eines geeigneten Starterersatzmittels 12 eine entsprechende Steuerelektronik 14 die Ansteuerelektronik ergänzt, insbesondere derart, dass eine gewünschte Leistung, Eingangsleistungsaufnahme und/oder Lichtleistung der LED-Röhre 2 oder eines sonstigen Leuchtmittels resultiert.

Gemäß einem weiteren Aspekt der vorliegenden Erfindung weist die Ansteuerelektronik einen Konstantstromregler auf, der mit den in Reihe geschalteten Leuchtdioden 11 eine Reihenschaltung, im Folgenden Lastschleife genannt, bildet. Alternativ oder zusätzlich ist die Ansteuerelektronik transformatorfrei, (drossel-)spulenfrei und/oder zumindest ausgangsseitig ausschließlich mit nicht-(nass-)elektrolytischen Kondensatoren aufgebaut.

Gemäß einem Aspekt der vorliegenden Erfindung wird die Reihenschaltung aus dem Konstantstromregler und einer Mehrzahl von Leuchtdioden 11 verwendet. Diese auch Lastschleife genannte Reihenschaltung kann mit verhältnismäßig hohen Spannungen betrieben werden, was den Einsatz eines Transformators erübrigen kann. So kann eine ausgesprochen kompakte Bauform bei gleichzeitig geringer Verlustleistung erreicht werden.

Beispielsweise kann eine Betriebsspannung der Lastschleife zumindest im Wesentlichen einer Summe der Flussspannungen der in Reihe geschalteten Leuchtdioden 11 und der Betriebs- bzw. Nennspannung des Konstantstromreglers und/oder mehr als 20 %, vorzugsweise mehr als 40 %, insbesondere mehr als 50 % der gleichgerichteten und geglätteten bzw. effektiven Nennspannung entsprechen.

Es kann vorgesehen sein, dass sich die an der Lastschleife anliegende Spannung über deren Elemente, also zumindest über den Konstantstromregler und die mit diesem in Reihe geschalteten Leuchtdioden 11, aufteilt. Hierbei ist es bevorzugt, dass die Lastschleife derart ausgebildet ist, dass an dem Konstantstromregler lediglich ein geringer Anteil der gesamten an der Lastschleife anliegenden Spannung abfällt. Dieser Anteil liegt vorzugsweise unter 50 %, weiter vorzugsweise unter 30 %, insbesondere unter 20 % und besonders bevorzugt unter 10 % oder 8 %. Insbesondere entsprechen die Flussspannungen der in Reihe geschalteten Leuchtdioden 11 mehr als 50 %, weiter bevorzugt mehr als 70 %, vorzugsweise mehr als 80 % und besonders bevorzugt mehr als 90 % oder 94 % der an der Lastschleife anliegenden Spannung. Ein Abfall eines lediglich geringen Anteils der gesamten Spannung an dem Konstantstromregler ermöglicht eine minimale verbleibende Verlustleistung in dem Konstantstromregler.

Gemäß einem Aspekt der vorliegenden Erfindung kann vorgesehen sein, dass die Ansteuerelektronik derart ausgebildet ist, dass bei Einsatz eines die Eingangsleistung reduzierenden Starterersatzmittels 12 der Konstantstromregler seine Betriebsspannung nicht mehr erreicht und eine Glättung der daraufhin welligen Spannung an den Leuchtdioden 11 kapazitiv abgeblockt wird. Dies erleichtert die Steuerung der Leistung bzw. Eingangsleistungsaufnahme des LED-Leuchtmittels 2 oder sonstigen Leuchtmittels durch das vorschlagsgemäße Starterersatzmittel 12.

In einem Aspekt der vorliegenden Erfindung kann vorgesehen sein, dass die Lastschleife über einen Gleichrichter mit gleichgerichteter Netzspannung versorgt wird. Hierbei kann es sich bevorzugt um einen Halbleiter- und/oder Brückengleichrichter handeln. Die Leuchtdioden 11 werden zur gleichmäßigen Lichtabgabe bevorzugt mit Gleichspannung oder einer vorzugsweise geglätteten gleichgerichteten Wechselspannung bzw. mit einem Gleichstrom oder einem vorzugsweise geglätteten gleichgerichteten Strom versorgt. Auch der Stromregler ist vorzugsweise zum Betrieb mit einer Gleichspannung bzw. Gleichstrom ausgebildet. Der Einsatz eines Gleichrichters bzw. Brückengleichrichters ermöglicht es in vorteilhafter Weise, die Lastschleife mit Gleichspannung bzw. Gleichstrom zu versorgen. Verbleibende Welligkeit der gleichgerichteten Spannung bzw. des gleichgerichteten Stroms wird vorzugsweise durch den Konstantstromregler ausgeglichen bzw. ausgeregelt.

Gemäß einem auch unabhängig realisierbaren Aspekt der vorliegenden Erfindung kann der Gleichrichter zur Versorgung mit Netzspannung kapazitiv mit dem Anschlussmittel gekoppelt sein, vorzugsweise ausschließlich mit einem oder auch mehreren nicht elektrolytischen Kondensatoren. Insbesondere kann vorgesehen sein, dass die kapazitive Kopplung des Gleichrichters mit der Netzspannung bzw. mit dem Anschlussmittel zum Verbinden der Ansteuerelektronik mit dem Stromnetz als kapazitiver Vorwiderstand fungiert. Es kann also vorgesehen sein, dass der Kapazitätswert eines die kapazitive Kopplung bildenden Kondensators derart ausgebildet ist, dass betriebsmäßig ein Spannungsabfall an diesem Kondensator resultiert, vorzugsweise wodurch die Spannungsamplitude an dem Gleichrichter bzw. die Spannung an der Lastschleife einstellbar ist.

Insbesondere weist dieser Kondensator einen Blindwiderstand bei Netzfrequenz, beispielsweise zwischen und/oder bei zumindest im Wesentlichen 50 Hz oder 60 Hz, derart auf, dass die Spannung an der Lastschleife auf zumindest im Wesentlichen die Summe der Flussspannungen der zur Bildung der Lastschleife in Reihe geschalteten Leuchtdioden 11 und der Nennspannung des Stromreglers reduziert wird.

Hierzu kann vorgesehen sein, dass der Kondensator, der zur elektrischen Verbindung des Gleichrichters mit dem Anschlussmittel ausgebildet ist, eine betriebsmäßig an einem Eingang des Gleichrichters anliegende Spannung auf weniger als 80 %, vorzugsweise weniger als 70 %, insbesondere weniger als 50 % und/oder mehr als 10 %, vorzugsweise mehr als 20%, insbesondere mehr als 30% einer an dem Anschlussmittel anliegenden Netzspannung reduziert bzw einen entsprechenden Spannungsabfall zwischen seinen Klemmen hervorruft.

Hierdurch ist es möglich, auch nur wenige in Reihe geschaltete Leuchtdioden 11 und/oder mehrere Lastschleifen mit nur wenigen in Reihe geschalteten Leuchtdioden 11 parallel zu betreiben, insbesondere mit höchstens 20, vorzugsweise weniger als 15, in Reihe geschalteten Leuchtdioden 11. Dies ist der Ausfallsicherheit zuträglich.

Da durch den Blindwiderstand der Kapazität keine zusätzlichen Verluste erzeugt werden, anders als bei ohmschen Widerständen, kann mit der bevorzugten kapazitiven Kopplung, auch kapazitiver Vorwiderstand genannt, zwischen Anschlussmittel und Gleichrichter in vorteilhafter Weise ein ausgesprochen effizientes Leuchtmittel mit geringer Wärmeentwicklung realisiert werden.

Ein Blindwiderstand im Sinne der vorliegenden Erfindung ist vorzugsweise ein zumindest im Wesentlichen imaginärer Widerstand im Sinne der Wechselstromrechnung, auch Reaktanz genannt. Der Einsatz eines Blindwiderstandes, insbesondere einer Kapazität, ermöglicht in vorteilhafter Weise eine Spannungsreduktion, ohne dass hierbei größere Mengen an Wärme bzw. Verlustleistung entstehen.

Es ist möglich, dass parallel zu den in Reihe geschalteten Leuchtdioden 11 mindestens ein vorzugsweise nicht-elektrolytischer Kondensator vorgesehen ist. Hierdurch ist es möglich, den betriebsmäßig durch die Leuchtdioden fließenden Strom zu glätten und/oder eine gleichmäßigere Lichtabgabe des Leuchtmittels zu erzielen.

Die Ansteuerelektronik kann mehrere Konstantstromregler aufweisen, die vorzugsweise eingangsseitig elektrisch leitend miteinander verbunden sind. Insbesondere können die Konstantstromregler gemeinsam mit Strom versorgt werden. Es ist möglich, dass mehrere Lastschleifen jeweils mit einem Konstantstromregler in Reihenschaltung mit mehreren Leuchtdioden 11 vorgesehen sind. Alternativ oder zusätzlich ist es möglich, dass die Konstantstromregler lastseitig elektrisch leitend miteinander verbunden sind. Hierdurch kann eine größere Stromstärke durch die Leuchtdioden 11 erreicht bzw. geregelt werden.

Ferner ist es möglich, dass die Lastschleife über einen Widerstand mit dem Gleich-richter verbunden ist. Dies kann einer Kurschlussspannungsfestigkeit des Leuchtmittels und/oder der Stromsteuerung durch den Konstantstromregler zuträglich sein.

Der Konstantstromregler ist vorzugsweise dazu ausgebildet, einen Strom durch die Leuchtdioden 11 der Lastschleife zumindest im Wesentlichen konstant zu halten, insbesondere mit Abweichungen von einem Sollwert für den Strom durch die Leuchtdioden 11 geringer als 30 %, vorzugsweise geringer als 20 %, insbesondere geringer als 10 %. Der Sollwert für den Strom durch die Leuchtdioden 11 ist bevorzugt größer als 10 mA, insbesondere mehr als 20 mA und/oder geringer als 1 A, insbesondere geringer als 500 mA. Dies ist der Lebensdauer der Leuchtdioden 11 zuträglich.

Zur Regelung des Stroms durch die Leuchtdioden 11 kann der Konstantstromregler mit dem Widerstand verbunden sein, insbesondere wobei der Widerstand als Shuntwiderstand verwendet wird. Alternativ oder zusätzlich kann vorgesehen sein, dass eine an dem Widerstand abfallende Spannung als Regelgröße für die Stromregelung durch den Konstantstromregler verwendet wird. Alternativ oder zusätzlich kann ein Steuereingang des Konstantstromreglers, insbesondere mittels eines Vorwiderstands, mit dem Ausgang des Konstantstromreglers elektrisch leitend verbunden. Das an dem Steuereingang anliegende Signal bzw. der anliegende Pegel kann zur Stromregelung des Konstantstromreglers verwendet werden. Es sind aber auch alternative oder zusätzliche Funktionen des Widerstands und/oder alternative Regelkonzepte für den Strom für bzw. durch die Leuchtdioden 11 bzw. für den Konstantstromregler möglich.

Im Sinne der vorliegenden Erfindung ist der Ausgang des Konstantstromreglers vorzugsweise den insbesondere in Reihe geschalteten Leuchtdioden 11 zugewandt bzw. mit diesen elektrisch leitend verbunden. Der Eingang des Konstantstromreglers kann dem Gleichrichter zugewandt bzw. mit diesem elektrisch leitend verbunden sein.

In einem weiteren Aspekt der vorliegenden Erfindung ist die Ansteuerelektronik, die vorzugsweise mit Netzspannung versorgt wird, bevorzugt transformatorfrei, also ohne Transformatoren aufgebaut. In vorteilhafter Weise ist es durch den vorschlagsgemäßen transformatorfreien Aufbau der Ansteuerelektronik bzw. des Leuchtmittels möglich, Verlustleistung bzw. Wärmeentwicklung zu vermeiden oder zu reduzieren. Entsprechendes kann für Schaltnetzteile gelten, die ebenfalls üblicherweise mit Transformatoren, Übertragern und/oder (Drossel-) Spulen aufgebaut sind, was hier bevorzugt vermieden wird, um die Verlustleistung zu verringern.

Zudem sind Transformatoren bzw. Spulen durch den Wicklungsprozess aufwendig und teuer in der Herstellung und bedingen einen hohen Platzbedarf im Gehäuse von Leuchtmitteln. Der transformatorfreie bzw. spulenfreie Aufbau der Ansteuerelektronik ermöglicht also ein kostengünstigeres, kompakteres Leuchtmittel.

Unter dem Begriff "Transformator" werden im Sinne der vorliegenden Erfindung vorzugsweise jegliche gekoppelte Induktivitäten, insbesondere auch gekoppelte Spulen oder Übertrager, verstanden.

Gemäß einem weiteren Aspekt der vorliegenden Erfindung, der auch unabhängig realisiert werden kann, ist die Ansteuerelektronik ausschließlich mit nicht-elektrolytischen oder zumindest mit nicht-nass-elektrolytischen Kondensatoren aufgebaut.

Gemäß einem weiteren auch unabhängig realisierbaren Aspekt der vorliegenden Erfindung trägt die erste Platine 19" die Ansteuerelektronik oder zumindest wesentliche Teile der Ansteuerelektronik. Es wird also dieselbe Platine verwendet, um sowohl Leuchtdioden 11 als auch die Ansteuerelektronik zu tragen. Daher kann auf die Anordnung mehrerer Platinen für die Leuchtdioden 11 und die Ansteuerelektronik nebeneinander bzw. untereinander in einem Gehäuse des Leuchtmittels verzichtet werden und das Leuchtmittel kann flexibler, kleiner bzw. mit einem geringeren Durchmesser gestaltet werden. Das Leuchtmittel ist also vorzugsweise frei von gestapelten bzw. nebeneinander oder untereinander angeordneten Platinen. Es kann vorgesehen sein, dass die Ansteuerelektronik ausschließlich in dem LED-Leuchtmittel 2, insbesondere auf der Platine 19", und in dem Starterersatzmittel 12 vorgesehen ist.

Weiter wird das Material für die zusätzliche Platine eingespart und eine fehleranfällige Kabelverbindung zwischen der Ansteuerelektronik und der Platine 19" mit den Leuchtdioden 11 kann vermieden werden. Letzteres ist zusätzlich in Hinblick auf den Produktionsaufwand vorteilhaft, da bisherige Kabelverbindungen zwischen unterschiedlichen Platinen in der Regel nicht automatisiert hergestellt werden können und daher besonders aufwändig sind.

Es ist gemäß einem weiteren, auch unabhängig realisierbaren Aspekt der vorliegenden Erfindung möglich, dass ein vorschlagsgemäßes Leuchtmittel mindestens eine zweite Platine mit mehreren Leuchtdioden aufweist. Zwischen der ersten, der zweiten und/oder weiteren Platine kann eine elektrisch leitende Steckverbindung zur Versorgung der Leuchtdioden der zweiten und/oder weiteren Platine durch die Ansteuerelektronik hergestellt sein.

Dies ermöglicht in vorteilhafter Weise einen flexiblen und/oder modularen Aufbau des Leuchtmittels, insbesondere wobei durch Anstecken der zweiten oder weiteren Platine die Länge des Leuchtmittels flexibel festgelegt werden kann. So können unterschiedliche Leuchtmittellängen unter Verwendung nur eines Typs oder zweier Typen von Platinen hergestellt werden. Durch Einsatz der Steckverbindung wird insbesondere erreicht, dass keine fehler- und verschleißanfällige Kabelverbindung bzw. aufwändige manuelle Lötverbindungen hergestellt werden müssen, um die Länge des Leuchtmittels skalieren zu können. Somit wird durch das vorschlagsgemäße Leuchtmittel eine einfache, kostengünstige, flexible und zuverlässige Skalierbarkeit, insbesondere der Länge des Leuchtmittels, erreicht. Zudem kann mit der Steckverbindung eine mechanische Kopplung bzw. Arretierung der Platinen zueinander erreicht werden.

Ferner ist die Kombination der obigen, auch unabhängig realisierbareren Aspekte besonders vorteilhaft. Insbesondere können die Platzierung der Ansteuerelektronik oder wesentlicher Teile dieser auf der ersten Platine 19" und die Verwendung der Steckverbindung jeweils einen fehleranfälligen Einsatz von Kabelverbindungen vermeidbar machen. In synergetischer Weise wird durch die Kombination der Aspekte ein besonders robustes, zuverlässiges und haltbares Leuchtmittel, bevorzugt ganz ohne Kabelverbindungen, ermöglicht.

In dem vorschlagsgemäßen Leuchtmittel werden bevorzugt mehrere, insbesondere mit leitenden Steckverbindungen gekoppelte, Platinen 19" mit Leuchtdioden 11 verwendet, von denen mindestens eine, vorzugsweise stirnseitig im Leuchtmittel angeordnete, Platine 19" zumindest wesentliche Teile der Ansteuerelektronik trägt. Dies erlaubt die Verwendung derselben Ansteuerelektronik in unterschiedlichen Leuchtmitteln bei gleichzeitig verringertem Platzbedarf, verbesserter Zuverlässigkeit und einfacherer sowie kostengünstigerer Montage.

Es kann vorgesehen sein, dass das Leuchtmittel die erste Platine 19" mit mehreren Leuchtdioden 11 und mindestens die zweite Platine mit mehreren Leuchtdioden 11 aufweist, vorzugsweise wobei zwischen den Platinen eine elektrisch leitende Steckverbindung zur Versorgung der Leuchtdioden der zweiten Platine durch die Ansteuerelektronik hergestellt ist und/oder wobei die Leuchtdioden 11 der zweiten Platine in Reihe zu den Leuchtdioden 11 der ersten Platine 19" geschaltet sind. Die Leuchtdioden 11 der ersten Platine 19" und der zweiten Platine können eine gemeinsame oder mehrere separate Lastschleifen mit einem oder mehreren Konstantstromreglem bilden, vorzugsweise wobei der oder die Konstantstromregler auf der ersten Platine angeordnet sind. Alternativ oder zusätzlich ist es möglich, dass die erste, zweite und/oder weitere Platine jeweils eine Lastschleife mit einem Konstantstromregler und mehreren Leuchtdioden 11 aufweisen. Dies kann einer einfachen modularen Skalierbarkeit zuträglich sein.

Hierbei kann vorgesehen sein, dass die Lastschleifen der jeweiligen Platinen von der ersten Platine 19" und/oder mit einem gemeinsamen Gleichrichter und/oder über die Steckverbindung versorgt werden. Ferner ist es möglich, dass die zweite oder weitere Platine mindestens ein Bauelement, insbesondere einen Kondensator oder Widerstand, zur Anpassung der Ansteuerelektronik bei Einsatz zusätzlicher Platinen aufweist, das bevorzugt über die Steckverbindung mit der ersten Platine bzw. mit der Ansteuerelektronik verbindbar ist.

Ein Kabel bzw. eine Kabelverbindung im Sinne der vorliegenden Erfindung ist ein vorzugsweise flexibler, biegsamer und/oder insbesondere radial und/oder zumindest teilweise mit einer Isolierung umgebener elektrischer Leiter, der insbesondere zumindest teilweise frei im Raum verlegbar ist. Beispielsweise kann ein Kabel im Sinne der vorliegenden Erfindung eine Litze, einen Klingeldraht oder dergleichen sein oder aufweisen. Insbesondere stellt ein starrer und/oder zumindest teilweise bzw. im Wesentlichen nicht-isolierter, elektrisch leitender Anschlussstift kein Kabel im Sinne der vorliegenden Erfindung dar.

Ein Leuchtmittel im Sinne der vorliegenden Erfindung ist vorzugsweise ein Mittel zur Emission elektromagnetischer Wellen im optisch sichtbaren Bereich, das insbesondere zur Beleuchtung von Räumen, Böden, Wänden, Decken, Objekten, Außenbereichen oder dergleichen geeignet ist. Das Leuchtmittel ist also bevorzugt dazu geeignet, eine ausreichende Lichtmenge zur Beleuchtung bereitzustellen, durch Beleuchtung eines Gegenstands dessen Sichtbarkeit zu verbessern bzw. eine ausreichende Lichtmenge abzugeben, beispielsweise einen Lichtstrom von mehr als 10 Lumen, vorzugsweise mehr als 100 Lumen, insbesondere mehr als 300 Lumen, damit diese Lichtmenge auch nach Reflexion durch ein Objekt von einem menschlichen Auge wahrgenommen werden kann. Ein Leuchtmittel ist daher insbesondere keine reine Status-LED oder dergleichen, die zwar auch leuchten kann, bei der jedoch primär bzw. ausschließlich die unmittelbare Lichtemission als Anzeige verwendet wird.

Eine Platine im Sinne der vorliegenden Erfindung ist eine vorzugsweise plattenförmige Anordnung mit einem isolierenden und einem leitenden Material, vorzugsweise wobei das isolierende Material bzw. Dielelektrikum einen Träger für zumindest eine Leitung aus dem leitenden Material bildet. Vorzugsweise kann es sich bei der Platine um eine solche für gedruckte Schaltungen, ein so genanntes "Printed Circuit Board" oder PCB handeln, insbesondere auf Epoxid-Basis (isolierendes Material) und/oder mit Kupferkaschierung (leitendes Material) handeln.

Gemäß einem auch unabhängig realisierbaren Aspekt der vorliegenden Erfindung weist das Starterersatzmittel 12 eine Parallel-Schaltung aus dem Kondensator 18 mit dem Widerstand 17 auf, wobei die Knoten der Parallel-Schaltung unmittelbar mit den Kontaktstiften 15 des Starterersatzmittels 12 verbunden sind. Der Kondensator 18 ist vorzugsweise als kapazitiver Vorwiderstand ausgebildet. Hierbei kann vorgesehen sein, dass der vorzugsweise nicht-elektrolytische Kondensator 18 und/oder das Starterersatzmittel 12 zwischen den Kontaktstiften 15 eine Kapazität aufweist, die mehr als 1 µF und/oder weniger als 100 µF, vorzugsweise mehr als 2 µF und/oder weniger als 20 µF, insbesondere mehr als 2,5 µF und/oder weniger als 10 µF entspricht. Der Widerstand 17 kann dazu ausgebildet sein, den Kondensator 18 langsam zu entladen, so dass bei Ausbau des Starterersatzmittels 12 aus einer Lampenfassung 23 die Gefahr einer elektrischen Entladung über die Kontaktstifte 15 verringert werden kann. Der Wert des Widerstands 17 kann mehr als 50 kΩ, vorzugsweise mehr als 100 kΩ, insbesondere mehr als 200 kΩ, besonders bevorzugt zwischen 400 kΩ und 600 kΩ, und/oder weniger als 10 MΩ, vorzugsweise weniger als 5 MΩ, insbesondere weniger als 1 MΩ betragen.

Gemäß einem weiteren, auch unabhängig realisierbaren Aspekt der vorliegenden Erfindung kann vorgesehen sein, dass der Wert des Kondensators 18 stufig einstellbar ist. Hierzu kann vorgesehen sein, dass der Kondensator 18 aus mehreren Bauelementen zusammengesetzt ist. Der Kondensator 18 kann insbesondere durch ein Kondensator-Array gebildet sein. Hierbei kann vorgesehen sein, dass die Bauelemente bzw. Einzelkondensatoren derart in unterschiedlicher Weise verschaltet werden können, dass der Kondensator 18 und/oder die Kapazität zwischen den Kontaktstiften 15 des Starterersatzmittels 12 unterschiedliche Werte ergibt. Beispielsweise können mehrere parallele Zweige mit Kondensatoren zwischen den Kontaktstiften 15 des Starterersatzmittels 12 vorgesehen sein, wobei ein oder mehrere Schalter in Reihenschaltung mit dem jeweiligen Kondensator vorgesehen sein können, die einen oder mehrere dieser Zweige auftrennen und/oder stromlos schalten können. Hierdurch kann die Kapazität des Kondensators 18 und/oder des Starterersatzmittels 12, vorzugsweise zwischen den Kontaktstiften 15, einstellbar sein. Beispielsweise können DIP-Schalter verwendet werden, um die Kapazität zu beeinflussen. Ferner kann vorgesehen sein, dass der Kondensator 18 eine Parallelschaltung mehrerer kapazitiver Bauelemente in parallel geschalteten Zweigen aufweist, die zumindest teilweise durch Schalter deaktivierbar sein können. Ferner kann vorgesehen sein, dass den unterschiedlichen Zweigen unterschiedliche Kapazitätswerte zugeordnet sind, insbesondere wobei ausgehend von einem ersten Zweig mit einem minimalen Kapazitätswert jeder weitere Zweig eine zum vorhergehenden Zweig verdoppelte Kapazität aufweist. Dies ermöglicht eine feine Einstellung des Kapazitätswerts über einen breiten Bereich unter Verwendung von möglichst wenigen Bauelementen.

Einzelne Komponenten der Ansteuerelektronik können einzeln und in unterschiedlichen Unterkombinationen realisiert werden. Beispielsweise kann die Lastschleife mit Gleichspannung verwendet werden, ohne dass die Gleichspannung durch einen Kondensator und/oder einen Gleichrichter erzeugt wird. Auch ist es möglich, die Ansteuerelektronik anstatt mit Leuchtdioden mit anderen Verbrauchern zu verwenden. Im Folgenden wird die Ansteuerelektronik anhand eines Ausführungsbeispiels näher erläutert, wobei Komponenten, Vorteile und Eigenschaften der vorangehenden Beschreibung einer Ansteuerelektronik denen der Ansteuerelektronik der folgenden Beschreibung entsprechen können.

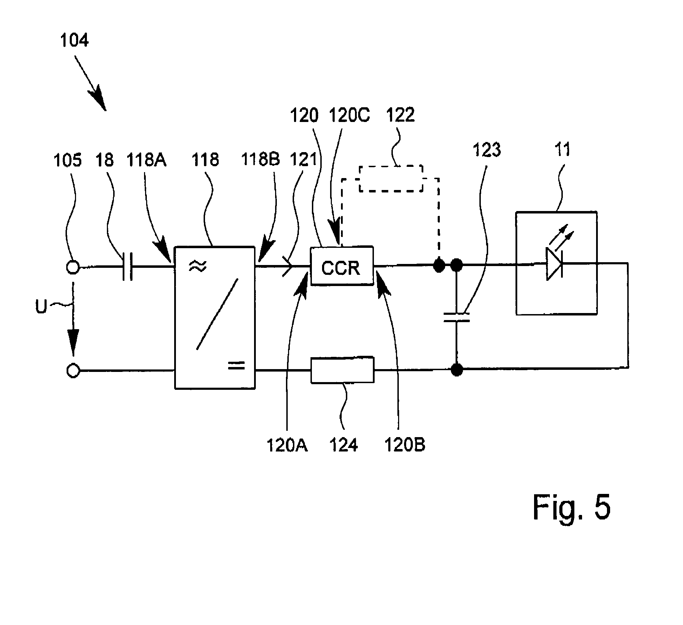

Fig.5 zeigt ein Schaltbild einer vorschlagsgemäßen Ansteuerelektronik 104 als Ausführungsbeispiel für die zuvor im Zusammenhang mit dem Starterersatzmittel 12 allgemein dargestellten Ansteuerelektronik. Die Ansteuerelektronik 104 kann auch unabhängig von sonstigen Aspekten der vorliegenden Erfindung und insbesondere unabhängig von dem Starterersatzmittel realisiert werden.

Das Anschlussmittel 105 ist vorgesehen, um die Ansteuerelektronik 104 mit Netz-spannung zu versorgen, was in Fig. 5 durch den Pfeil U angedeutet ist. Das Anschlussmittel 105 kann einem oder mehreren Kontaktstiften 15 entsprechen oder umgekehrt. Ein Gleichrichter 118 ist im Darstellungsbeispiel kapazitiv mit dem Anschlussmittel 105 gekoppelt. Insbesondere ist mindestens ein Kondensator 18 vorgesehen, über den das Anschlussmittel 105 mit dem Gleichrichter 118 elektrisch leitend verbunden ist. Der Kondensator 18 kann auch durch mehrere Bauelemente gebildet sein, insbesondere durch eine Kondensatorbank mit mehreren Kondensatoren in Reihenschaltung und/oder Parallelschaltung. Es kann also beispielsweise vorgesehen sein, dass der Kondensator 18 durch eine Parallelschaltung mehrerer Reihenschaltungen einzelner Kondensatoren gebildet ist.

Wie bereits eingangs erläutert, ist vorzugsweise zumindest der Kondensator 18 vollständig oder teilweise in dem Starterersatzmittel 12 angeordnet oder bildet einen Teil des Starterersatzmittels 12. Der Widerstand 17 und/oder die Spule 19 können alternativ oder zusätzlich vorgesehen sein, auch wenn sie in Fig. 5 aus Vereinfachungsgründen nicht dargestellt sind. Insbesondere weist das Starterersatzmittel den Kondensator 18 vollständig oder teilweise in Parallelschaltung mit dem Widerstand 17 auf, wie eingangs beschrieben.

Der Kondensator 18 kann derart ausgebildet sein, dass er betriebsmäßig einen Spannungsabfall erzeugt, so dass die Netzspannung den Gleichrichter 118 mit einer reduzierten Amplitude erreicht. Insbesondere kann vorgesehen sein, dass der Kondensator 18 bzw. die Ansteuerelektronik 104 derart ausgebildet ist, dass die Amplitude der Spannung am Eingang 118A des Gleichrichters 118 weniger als 80 %, vorzugsweise weniger als 70 %, insbesondere weniger als 50 % und/oder mehr als 5 %, vorzugsweise mehr als 10 %, insbesondere mehr als 20 % der Netzspannungsamplitude entspricht. Die Kapazität des Kondensators 18 kann mehr als 1 µF, vorzugsweise mehr als 2 µF, insbesondere mehr als 3 µF und/oder weniger als 100 µF, vorzugsweise weniger als 50 µF, insbesondere weniger als 20 µF betragen.

Der Gleichrichter 118 kann eine oder mehrere Dioden und/oder Transistoren aufweisen. Insbesondere ist der Gleichrichter 118 als Brückengleichrichter aufgebaut oder weist einen solchen auf. Hierdurch kann eine hohe Effizienz des Gleichrichters 118 und eine entsprechend geringere Verlustleistung erreicht werden. Der Gleichrichter 118 ist vorzugsweise dazu ausgebildet, aus einer Wechselspannung an seinem Eingang 118A eine Gleichspannung oder gleichgerichtete Spannung an seinem Ausgang 118B zu erzeugen. Die durch den Kondensator 18 vorzugsweise in ihrer Amplitude reduzierte Netzspannung kann also dem Gleichrichter 118 zugeführt werden, der hieraus eine korrespondierende Gleichspannung erzeugen kann. Diese Gleichspannung kann dann dazu verwendet werden, die Leuchtdioden 3, 109 zu betreiben.

Aus Gründen der Übersichtlichkeit ist in dem Schaltplan aus Fig. 105 lediglich eine Leuchtdiode 11 dargestellt, auch wenn es sich hierbei um eine Reihenschaltung, Parallelschaltung oder Kombination aus Reihen- und Parallelschaltung von mehreren Leuchtdioden 11 handeln kann. Wie im Darstellungsbeispiel aus Fig. 105 kann aber auch nur eine Leuchtdiode 11 vorgesehen sein. Besonders bevorzugt ist jedoch zumindest eine Reihenschaltung mehrerer Leuchtdioden 11 die sich über mehrere Platinen erstrecken kann. Es ist also bevorzugt, im Darsteltungsbeispiel aus Fig. 105 das Diodensymbol bzw. die Leuchtdiode 11 durch eine Reihenschaltung mehrerer Leuchtdioden 11 zu ersetzen, was aufgrund der besseren Übersichtlichkeit nicht dargestellt ist. Ferner ist es möglich, dass Leuchtdioden 11 parallel zueinander angeordnet sind, insbesondere wobei mehrere Reihenschaltungen von Leuchtdioden 11 parallel zueinander angeordnet sein können.

Die Leuchtdioden 11 bilden vorzugsweise eine Reihenschaltung mit einem Konstantstromregler 120, wobei diese Reihenschaltung auch Lastschleife genannt wird. Der Konstantstromregler 120, auch "Constant Current Regulator" oder CCR genannt, ist vorzugsweise dazu ausgebildet, einen Strom konstant zu halten bzw. Stromschwankungen auszugleichen und/oder einen Strom zu begrenzen. Der Konstantstromregler 120 im Darstellungsbeispiel ist dazu ausgebildet, einen vorzugsweise voreingestellten bzw. vordefinierten Strom 121 insbesondere dadurch konstant zu halten, dass durch Regelung einer Impedanz ein Spannungsabfall durch den Konstantstromregler 120 verändert bzw. geregelt werden kann. Diese Impedanz kann mit steigendem Strom vergrößert und/oder mit sinkendem Strom verringert werden, wodurch einer Stromänderung entgegengewirkt werden kann. Es sind alternativ oder zusätzlich jedoch auch andere Regelmechanismen möglich, um mit dem Konstantstromregler 120 den Strom 121 zu stabilisieren, zu regeln bzw, konstant zu halten.

Der Strom 121 durch die Lastschleife und/oder die Leuchtdioden 11 wird also vorzugsweise durch den Konstantstromregler 120 bestimmt, insbesondere geregelt. Hierzu kann ein optionaler Abgriff am Ausgang 120B des Konstantstromreglers 120 vorgesehen sein, der mit einem Steuereingang 120C des Konstantstromreglers 120 verbunden sein kann, insbesondere über einen Vorwiderstand 122. Der durch den Konstantstromregler 120 geregelte Strom 121 wird vorzugsweise zum Betrieb der Leuchtdioden 11 verwendet. Hierzu kann der Konstantstromregler 120 mit seinem Ausgang 120B leitend mit den Leuchtdioden 103, 109 verbunden sein.

Es kann vorgesehen sein, dass der Ausgang 120B des Konstantstromreglers 120 einen Kondensator 123 aufweist, vorzugsweise wobei mit dem Kondensator 123 der von dem Konstantstromregler 120 abgegebene Strom 121 stabilisiert werden kann. Insbesondere ist der Kondensator 123 dazu ausgebildet, Spannungsänderungen am Ausgang 120B des Konstantstromreglers 120 bzw. an den Leuchtdioden 11 zu kompensieren. Hierzu kann der Kondensator 123 derart ausgebildet und elektrisch angeschlossen sein, dass bei einer Spannungs- bzw. Stromänderung am Ausgang 120B des Konstantstromreglers 120 ein Strom in den oder aus dem Kondensator 123 fließt, wodurch einer Spannungsänderung entgegengewirkt wird. Der Kondensator 123 ist vorzugsweise aus mehreren Kondensatoren gebildet. Es kann vorgesehen sein, dass der Kondensator 123 eine oder mehrere Reihenschaltungen bzw. Parallelschaltungen von Kondensatoren aufweist, insbesondere eine Parallel-schaltung mehrerer Reihenschaltungen von Kondensatoren.

Auf einer Platine der LED-Leuchtröhre 2 und/oder des Starterersatzmittels 12 kann für den Kondensator 18 und/oder für den Kondensator 123 eine Anschlussbank mit einer Vielzahl von Anschlussmöglichkeiten für Kondensatoren vorgesehen sein. Dies ermöglicht eine individuelle Belegung und somit Skalierung des Kondensators 18 und/oder des Kondensators 123, ohne dass Änderungen an dem Platinenlayout notwendig wären.

Wie bereits eingangs erläutert, ist es bevorzugt, dass die Ansteuerelektronik 104 zumindest ausgangsseitig elektrolytkondensatorfrei ausgebildet ist. Hierzu ist es bevorzugt, dass der Kondensator 23 bzw. den Kondensator 23 bildende Kondensatoren oder Bauelemente ausschließlich nicht-elektrolytischen Typs ist bzw. sind. So kann erreicht werden, dass Ausgleichsströme, die den Kondensator 23 laden oder entladen, insbesondere um die Ausgangsspannung bzw. den Ausgangsstrom des Konstantstromreglers 118 zu stabilisieren, nicht oder nur zu einem sehr geringen Teil durch den Innenwiderstand des Kondensators 123 in Wärme umgesetzt werden.

Ein Verlustfaktor im Sinne der vorliegenden Erfindung beschreibt das Verhältnis von Imaginärteil zu Realteil einer Impedanz, insbesondere des Kondensators 18 bzw. 23, vorzugsweise bei Netzfrequenz, insbesondere also bei 50 bzw. 60 Hz. Es ist also bevorzugt, dass zumindest der ausgangsseitige Kondensator 123 und/oder der Kondensator 18, optional aber auch weitere oder alle Kondensatoren der Ansteuerelektronik 104, einen Verlustfaktor geringer als 5 %, vorzugsweise geringer als 4 %, insbesondere geringer als 3 % aufweisen, insbesondere bei Frequenzen größer als 45 Hz und/oder geringer als 65 Hz. Hierdurch kann die Effizienz des Leuchtmittels gesteigert und die Wärmeentwicklung reduziert werden.

Die Lastschleife kann über einen (Vor-)Widerstand 124 mit dem Gleichrichter 118 verbunden sein. Der Widerstand 124 kann also in Reihe zu dem Konstantstromregler 120 und den Leuchtdioden 11 geschaltet sein. Der Widerstand 124 dient vorzugsweise der Kurzschiussfesfigkeit, einer Strombegrenzung und/oder der Anpassung der Betriebsspannung für den Konstantstromregler 120. Der Widerstand 124 kann aus mehreren Widerständen zusammengesetzt sein, die ihrerseits eine Reihenschaltung, eine Parallelschaltung und/oder eine Parallelschaltung von Reihenschaltungen bilden können.

Im Darstellungsbeispiel ist der Gleichrichter 118 vorzugsweise als Brückengleichrichter ausgebildet. Alternativ oder zusätzlich kann es jedoch auch möglich sein, dass ein einfacher Gleichrichter, beispielsweise lediglich eine Gleichrichterdiode, zur Bildung des Gleichrichters 118 verwendet wird. In diesem Fall kann die Lastschleife, insbesondere über den Widerstand 124, direkt mit dem Anschlussmittel 105 für die Netzspannung verbunden werden. Es kann also ausreichend sein, dass der Konstantstromregler 120 über den Gleichrichter 118 mit gleichgerichteter Netz-spannung versorgt wird.

Auch ist es möglich, dass der Kondensator 18 zwischen unterschiedlichen leitenden Verbindungen zwischen dem Anschlussmittel 105 und dem Gleichrichter 118 aufgeteilt ist. Dies gilt insbesondere, wenn der Gleichrichter 118 einen Brückengleichrichter aufweist oder als Brückengleichrichter ausgebildet ist.

Einzelne Aspekte der vorliegenden Erfindung können auch unabhängig voneinander und in beliebiger Kombination realisiert bzw. verwendet werden, wobei zumindest teilweise ähnliche oder sonstige Eigenschaften oder Vorteile wie die beschriebenen erreicht werden können. Insbesondere können das Starterersatzmittel 12 und die Ansteuerelektronik 104 unabhängig voneinander realisiert werden.

Des Weiteren wird darauf hingewiesen, dass alle vorgenannten Bereichsangaben und Werteintervalle sämtliche innerhalb der jeweiligen Bereiche bzw. Intervalle liegenden weiteren Bereiche/lntervalle und auch sämtliche Einzelwerte umfassen, auch wenn diese im Einzelnen nicht angegeben sind. Sämtliche dieser nicht genannten Bereiche/Intervalle und Einzelwerte werden als erfindungswesentlich angesehen.

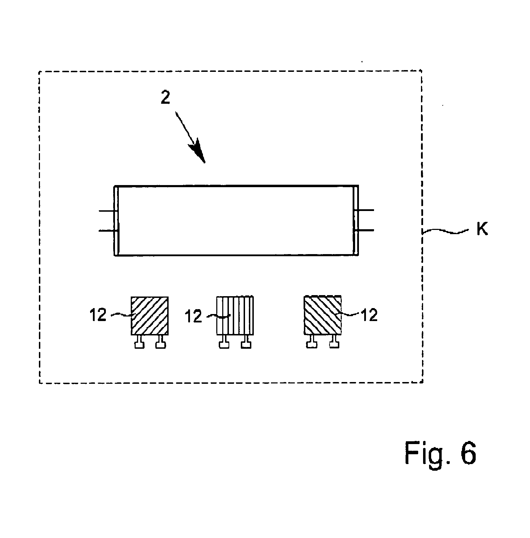

Fig. 6 zeigt ein Kit K mit einer LED-Leuchtrühre 2 und mindestens einem, vorzugsweise mindestens zwei, im Darstellungsbeispiel drei, bevorzugt vier oder mehr Starterersatzmittetn 12. Details der LED-Leuchtröhre 2 und der Starterersatzmittel 12 sind lediglich aus Gründen der Übersichtlichkeit nicht erneut dargestellt.

Die Starterersatzmittel 12 des Kits K sind vorzugsweise unterschiedlich ausgebildet. Insbesondere sind die Starterersatzmittel 12 zu unterschiedlicher Steuerung der elektrischen Leistung, insbesondere der Eingangsleistungsaufnahme, der LED-Leuchtröhre 2 ausgebildet.

Hierzu kann vorgesehen sein, dass die Starterersatzmittel 12, vorzugsweise ausschließlich nicht-elektrolytische, Kondensatoren 18 mit unterschiedlichen Werten und/oder zwischen den Kontaktstiften 15 unterschiedliche Kapazitätswerte aufweisen. Vorzugsweise beträgt der Kapazitätswert eines zweiten Starterersatzmittels 12 mehr als das 1,5-fache und/oder weniger als 3-fache des Kapazitätswert eines ersten Starterersatzmittels 12 des Kits. Insbesondere kann vorgesehen sein, dass das vorschlagsgemäße Kit K ein erstes Starterersatzmittel 12 mit einem ersten Kapazitätswert, ein zweites Starterersatzmittel 12 mit einem im Vergleich zum ersten Kapazitätswert zumindest im wesentlichen verdoppelten Kapazitätswert und, vorzugsweise, ein drittes Starterersatzmittel 12 einen im Vergleich zum ersten Kapazitätswert zumindest im Wesentlichen 4-fach höheren Kapazitätswert aufweist. Hierbei kann der erste und/oder geringste Kapazitätswert größer als 1 µF und/oder geringer als 5 µF sein.

Das Kit K ist vorzugsweise derart ausgebildet, dass die Leuchtdioden 11 der LED-Leuchtröhre 2 über eine Ansteuerelektronik versorgt werden, die zum einen Teil in der LED-Leuchtröhre 2, zum anderen Teil in dem Starterersatzmittel 12 angeordnet ist, so dass die Eigenschaften der Ansteuerelektronik, vorzugsweise in Bezug auf die Steuerung der elektrischen Leistung der LED-Leuchtröhre 2, durch die Wahl eines der unterschiedlichen Starterersatzmittel 12 einstellbar ist. Hierdurch kann durch das vorschlagsgemäße Kit K in synergistischer Weise die Helligkeit der LED-Leuchtröhre 2 beeinflusst werden und eine Fehlfunktion durch Verwenden falscher Starter bzw. Starterersatzmittel vermieden werden. Die Ansteuerelektronik entspricht vorzugsweise ganz oder teilweise der Ansteuerelektronik 104 aus Fig. 5, insbesondere wobei der Kondensator 5 zumindest teilweise in dem Starterersatzmittel 12 angeordnet ist. Es ist aber auch eine Kombination mit einer alternativen Ansteuerelektronik möglich. Das Starterersatzmittel kann auch hier Teil der alternativen Ansteuerelektronik bilden.

In vorteilhafter Weise kann mit dem vorschlagsgemäßen Kit K die elektrische Leistung des Leuchtmittels, insbesondere der LED-Leuchtröhre 2, durch Wahl des Starterersatzmittels 12 einstellbar, konfigurierbar oder auswählbar sein. Hierbei kann der Kondensator 18 bzw. die hierdurch vorgerufene Kapazität zwischen den Kontaktstiften 15 des Starterersatzmittels 12 als sogenannter kapazitiver Vorwiderstand verwendet werden, welcher die Leistungsaufnahme der LED-Leuchtröhre 2 reduzieren kann. Dieser kapazitive Vorwiderstand bildet vorzugsweise Teil der Ansteuerelektronik zur Energieversorgung der LED-Leuchtröhre 2. Alternativ oder zusätzlich kann ein Starterersatzmittel 12 einstellbar ausgebildet sein, insbesondere bezüglich des Kondensators 18 bzw. der hierdurch vorgerufenen Kapazität zwischen den Kontaktstiften 15 des Starterersatzmittels 12.

Ferner ist möglich, dass zumindest eines der Starterersatzmittel 12 dazu ausgebildet ist, ein Vorschaltmittel 4 der Leuchtstofflampenfassung 23 zu berücksichtigen, insbesondere zu kompensieren. Bei dem Vorschaltmittel 4 kann es sich insbesondere um eine Drossel, aber auch um elektronische Vorschaltgeräte oder dergleichen handeln.

Wenn das Vorschaltmittel 4 in die Leuchtstofflampenfassung 23 fest eingebaut ist, ist es nachteilig, bei Nachrüsten einer LED-Leuchtröhre 2 die Leuchtstofflampenfassung 23 demontieren und das Vorschaltmittel 4 entnehmen zu müssen. Daher betrifft ein Aspekt der vorliegenden Erfindung ein für diesen Zweck speziell ausgebildetes Starterersatzmittel 12, das dazu ausgebildet ist, den Betrieb der LED-Leuchtröhre 2 auch mit einem derartigen Vorschaltmittel 4 zu ermöglichen. Beispielsweise kann die Kapazität des Kondensators 18 so bemessen sein, dass diese durch Einsetzen des Starterersatzmittels 12 in die Leuchtstofflampenfassung 23 bzw. bei elektrischem Verbinden des Starterersatzmittels 12 mit dem Vorschaltmittel 4 einen Serienschwingkreis mit einer Resonanzfrequenz bildet, die vorzugsweise zumindest im Wesentlichen der Netzfrequenz (50 Hz bzw. 60 Hz) entspricht. Dieser Serienschwingkreis wirkt dann als Kurzschluss bei Netzfrequenz, weshalb Leistungsverluste durch einen Spannungsabfall an dem Vorschaltmittel vermieden werden. Ein entsprechendes Starterersatzmittel 12 ist vorzugsweise Teil des vorschlagsgemäßen Kits. Mit dem Kit K kann also sichergestellt werden, dass die LED-Leuchtröhre 2 sowohl mit Leuchtstofflampenfassungen 23 mit als auch ohne Vorschaltmittel 4 betrieben werden kann. Das Starterersatzmittel 12 kann auch sowohl zum Betrieb mit einem Vorschaltmittel als auch zur Einstellung der Leistung des Leuchtmittels ausgebildet sein.

Unterschiedliche Starterersatzmittel 12 des Kits K sind besonders bevorzugt unterschiedlich gekennzeichnet. Hierbei kann vorgesehen sein, dass die unterschiedlichen Starterersatzmittel unterschiedliche Gehäusefarben aufweisen. In einer bevorzugten Ausführungsform sind dem Kit K die LED-Leuchtröhre 2 sowie vier unterschiedliche Starterersatzmittel 12 beigelegt. Die unterschiedlichen Starterersatzmittel 12 können die Farben Grün, Blau, Orange und/oder Rot aufweisen. Hierbei kann vorgesehen sein, dass das grüne Starterersatzmittel zu einer geringeren Eingangsleistungsaufnahme des in die Leuchtstofftampenfassung 23 einsetzbaren Leuchtmittels in Vergleich zu jedem anderen dem Kit K beigefügte Starterersatzmittel 12 führt. Ein mit rot gekennzeichnetes Starterersatzmittel 12 kann zu einer im Vergleich zu den sonstigen dem Kit K beigefügten Starterersatzmitteln 12 höchsten Leistungsaufnahme führen. Ein blaues und/oder orangenes Starterersatzmittel 12 können zu unterschiedlichen mittleren Leistungsaufnahmen führen. Es versteht sich von selbst, dass alternativ oder zusätzlich auch andere Farben gewählt werden können, die Farben das Gesamte oder nur ein Teil der jeweiligen Gehäuse der Starterersatzmittel 12 kennzeichnen können oder eine sonstige Kennzeichnung durch Zeichen oder dergleichen erfolgen kann. Auch ist eine andere Anzahl von Starterersatzmitteln 12 möglich.

Das Kit K kann dadurch gekennzeichnet sein, dass seine Komponenten, also zumindest ein Starterersatzmittel 12 und ein Leuchtmittel, vorzugsweise eine LED-Leuchtröhre 2, durch Mittel als zusammengehörig gekennzeichnet, miteinander verbunden oder in sonstiger Weise miteinander assoziiert sind. Insbesondere sind diese Komponenten in einer gemeinsamen oder in verbundenen Verpackungen angeordnet. Alternativ oder zusätzlich können die Komponenten eine oder mehrere miteinander assoziierte oder eine gemeinsame Anleitungen, Beschreibungen, Hinweise und/oder Bezeichnungen bzw. Kennzeichnungen aufweisen. Die Zugehörigkeit der Komponenten zu dem Kit K kann aber alternativ oder zusätzlich auch in sonstiger Weise und mit sonstigen Mitteln kenntlich gemacht werden.

Weitere Aspekte der vorliegenden Erfindung:
Aspekt 1. Leuchtmittel, insbesondere LED-Röhre, mit mehreren in Reihe geschalteten Leuchtdioden getragen von einer Platine, mit einer Ansteuerelektronik zur Versorgung der Leuchtdioden, und mit einem Anschlussmittel zum Anschluss der Ansteuerelektronik an Netzspannung, dadurch gekennzeichnet, dass die Ansteuerelektronik einen Konstantstromregler aufweist, der mit den in Reihe geschalteten Leuchtdioden eine Reihenschaltung, im Folgenden Lastschleife genannt, bildet; und/oder
   dass die Ansteuerelektronik transformatorfrei und/oder zumindest ausgangs-seitig ausschließlich mit nicht-nass-elektrolytischen Kondensatoren aufgebaut ist.
Aspekt 2. Leuchtmittel gemäß Aspekt 1, dadurch gekennzeichnet, dass die Lastschleife über einen Gleichrichter mit gleichgerichteter Netzspannung versorgbar ist.
Aspekt 3. Leuchtmittel gemäß Aspekt 2, dadurch gekennzeichnet, dass der Gleich-richter zur Versorgung mit Netzspannung kapazitiv mit dem Anschlussmittel gekoppelt ist, vorzugsweise ausschließlich mit einem oder mehreren nicht-nass-elektrolytischen Kondensatoren.
Aspekt 4. Leuchtmittel gemäß einem der voranstehenden Aspekte, dadurch gekennzeichnet, dass den in Reihe geschalteten Leuchtdioden mindestens ein vorzugsweise nicht-elektrolytischer Kondensator zugeordnet ist, vorzugsweise wobei der Kondensator zu den in Reihe geschalteten Leuchtdioden parallel geschaltet ist.
Aspekt 5. Leuchtmittel gemäß einem der voranstehenden Aspekte, dadurch gekennzeichnet, dass die Ansteuerelektronik mehrere Konstantstromregler aufweist, die eingangsseitig und vorzugsweise lastseitig elektrisch leitend verbunden sind.
Aspekt 6. Leuchtmittel gemäß einem der voranstehenden Aspekte, dadurch gekennzeichnet, dass mehrere Lastschleifen jeweils mit einem Konstantstromregler (20) in Reihenschaltung mit mehreren Leuchtdioden vorgesehen sind.
Aspekt 7. Leuchtmittel gemäß einem der Aspekte 2 bis 6, dadurch gekennzeichnet, dass die Lastschleife über einen Widerstand mit dem Gleichrichter verbunden ist.
Aspekt 8. Leuchtmittel gemäß einem der Aspekte 3 bis 7, dadurch gekennzeichnet, dass der Kondensator zur elektrischen Verbindung des Gleichrichters mit dem Anschlussmittelausgebildet ist, wobei der Kondensator dazu ausgebildet ist, betriebsmäßig eine an einem Eingang des Gleichrichters anliegende Spannung auf höchstens 80 %, vorzugsweise weniger als 70 %, insbesondere weniger als 50 % und/oder mehr als 10 %, vorzugsweise mehr als 20%, insbesondere mehr als 30% einer an dem Anschlussmittel anliegenden Netz-spannung zu reduzieren.
Aspekt 9. Leuchtmittel gemäß einem der voranstehenden Aspekte, dadurch gekennzeichnet, dass das Leuchtmittel mindestens eine zweite Platine mit mehreren Leuchtdioden aufweist, vorzugsweise wobei zwischen den Platinen eine elektrisch leitende Steckverbindung zur Versorgung der Leuchtdioden der zweiten Platine durch die Ansteuerelektronik hergestellt ist und/oder wobei die Leuchtdioden der zweiten Platine in Reihe zu den Leuchtdioden der ersten Platine geschaltet sind.
Aspekt 10. Leuchtmittel gemäß einem der voranstehenden Aspekte, dadurch gekennzeichnet, dass das Leuchtmittel frei von Kabeln ist und/oder ein Gehäuse aufweist, wobei das Gehäuse Polymethylmethacrtylat aufweist oder zumindest im Wesentlichen aus Polymethylmethacrylat besteht.

Einzelne Aspekte der vorliegenden Erfindung können unabhängig voneinander realisiert und beliebig miteinander kombiniert werden. Insbesondere kann die Ansteuerelektronik 104 auch unabhänig von dem Starterersatzmittel 12 und unabhänig von der LED-Röhre 2 oder der Anordnung in dieser realisiert werden. Weiter kann beispielsweise das Kit K ohne die Ansteuerelektronik 104 realisiert werden. Eine gleichzeitige Verwirklichung mehrerer Aspekte der vorliegenden Erfindung ist jedoch bevorzugt.

### Bezugszeichenliste:

| | |
|---|---|
| 1 | Schaltanordnung |
| 2 | LED-Leuchtröhre |
| 3 | Verbindungselement |
| 4 | Vorschaltmittel |
| 5 | erster Halter |
| 6 | zweiter Halter |
| 7 | Spannungsquelle |
| 8 | Kontaktstift an einem ersten Ende der LED-Leuchtröhre |
| 9 | Kontaktstift an einem zweiten Ende der LED-Leuchtröhre |
| 10 | Platine |
| 11 | Leuchtdiode |
| 12 | Starterersatzmittel |
| 13 | Gehäuse des Starterersatzmittels |
| 14 | Steuerelektronik des Starterersatzmittels |
| 15 | Kontaktstift des Starterersatzmittels |
| 16 | Platine |
| 17 | Widerstand |
| 18 | Kondensator |
| 19 | Spule |
| 19', 19" | Platine |
| 20 | Gehäuseboden des Starterersatzmittels |
| 21 | elektrisches Bauelement |
| 22 | Leuchte |
| 23 | Leuchtstofflampenfassung |
| 24 | Gehäuse bzw. Abdeckung der LED-Leuchtröhre |
| 104 | Ansteuerelektronik |
| 105 | Anschlussmittel |
| 118 | Gleichrichter |
| 118A | Gleichrichtereingang |
| 118B | Gleichrichterausgang |
| 120 | Konstantstromregler |
| 120A | Eingang des Konstantstromreglers |
| 120B | Ausgang des Konstantstromreglers |
| 120C | Steuereingang |
| 121 | Strom |
| 122 | Vorwiderstand |
| 123 | Kondensator |
| 124 | Widerstand |
| U | Pfeil (Netzspannung) |
| K | Kit |

## Patentansprüche

1. Starterersatzmittel (12) für eine Leuchtstofflampenfassung (23),
wobei das Starterersatzmittel (12) zum Einsatz in der Leuchtstofflampenfassung (23) ausgebildet ist,
**dadurch gekennzeichnet,**
**dass** das Starterersatzmittel (12) zur Steuerung der elektrischen Leistung, insbesondere der Eingangsleistungsaufnahme, eines in die Leuchtstofflampenfassung (23) einsetzbaren Leuchtmittels, insbesondere einer LED-Leuchtröhre (2) mit mehreren Leuchtdioden (11), ausgebildet ist.

2. Starterersatzmittel gemäß Anspruch 1, **dadurch gekennzeichnet, dass** das Starterersatzmittel (12) derart ausgebildet ist, dass das Starterersatzmittel (12) diejenige Änderung der elektrischen Leistung des Leuchtmittels kompensiert, die durch elektrisches Verbinden eines der Strombegrenzung dienenden Vorschaltmittels (4) der Leuchtstofflampenfassung (23) und einer der Versorgung des Leuchtmittels dienenden Ansteuerelektronik (104) hervorgerufen wird.

3. Starterersatzmittel gemäß Anspruch 1 oder 2, **dadurch gekennzeichnet, dass** das Starterersatzmittel (12) eine Steuerelektronik (14) mit mindestens einem vorzugsweise nicht-elektrolytischen Kondensator (17) und/oder mit mindestens einem Widerstand (16) und/oder mit mindestens einer Spule (18) aufweist, vorzugsweise wobei der mindestens eine nicht-elektrolytische Kondensator (17) und/oder der mindestens eine Widerstand (16) und/oder die mindestens eine Spule (18) als SMD-Bauelement(e) ausgeführt ist/sind.

4. Starterersatzmittel gemäß einem der voranstehenden Ansprüche, **dadurch gekennzeichnet, dass** die Steuerelektronik (14) derart ausgebildet ist, dass die elektrische Leistung des Leuchtmittels stufig oder stufenlos einstellbar ist, vorzugsweise wobei die Steuerelektronik (14) derart ausgebildet ist, dass mittels Einstellung der elektrischen Leistung des Leuchtmittels der Lichtstrom, vorzugsweise in einem Bereich von 0% bis 150% des nominellen Lichtstroms, besonders bevorzugt in einem Bereich von 100% bis 140% des nominellen Lichtstroms, einstellbar ist.

5. Starterersatzmittel gemäß einem der voranstehenden Ansprüche, **dadurch gekennzeichnet, dass** das Starterersatzmittel als Kondensator (17) ausschließlich einen oder mehrere Keramikschicht- und/oder Folienschichtkondensatoren aufweist; und/oder
dass der vorzugsweise nicht-elektrolytische Kondensator (18) und/oder das Starterersatzmittel (12) zwischen seinen Kontaktstiften (15) eine Kapazität aufweist, die mehr als 1 µF und/oder weniger als 100 µF, vorzugsweise mehr als 2 µF und/oder weniger als 20 µF, insbesondere mindestens 2,5 µF und/oder höchstens 10 µF entspricht; und/oder
dass das Starterersatzmittel (12) eine Versorgung der Ansteuerelektronik (104) des Leuchtmittels mit insbesondere reduzierter Netzspannung ermöglicht.

6. Ansteuerelektronik (104) für eine LED-Leuchtröhre (2) mit einem Starterersatzmittel (12) nach einem der voranstehenden Ansprüche, das einen Teil der Ansteuerelektronik (104) bildet.

7. Ansteuerelektronik nach Anspruch 6, **dadurch gekennzeichnet, dass** die Ansteuerelektronik (104) einen Konstantstromregier (120) aufweist, der dazu ausgebildet ist, mit Leuchtdioden (11) der LED-Leuchtröhre (2) eine Reihenschaltung, im Folgenden Lastschleife genannt, zu bilden und mit die Lastschleife über einen Gleich-richter (118) mit gleichgerichteter Netzspannung versorgbar ist; und/oder dass der Gleichrichter (118) zur Versorgung mit Netzspannung kapazitiv mit einem Anschlussmittel (105) gekoppelt ist, vorzugsweise ausschließlich mit einem oder mehreren nicht-nass-elektrolytischen und/oder in dem Starterersatzmittel (12) angeordneten Kondensatoren (18), insbesondere wobei der Kondensator (18) zur elektrischen Verbindung des Gleichrichters (118) mit dem Anschlussmittel (105) ausgebildet ist, wobei der Kondensator (18) dazu ausgebildet ist, betriebsmäßig eine an einem Eingang des Gleichrichters (118) anliegende Spannung gegenüber an dem Anschlussmittel (105) anliegenden Netzspannung zu reduzieren; und/oder dass den in Reihe geschalteten Leuchtdioden (11) mindestens ein vorzugsweise nicht-elektrolytischer Kondensator (123) zugeordnet ist, vorzugsweise wobei der Kondensator (123) zu den in Reihe geschalteten Leuchtdioden (11) parallel geschaltet ist; und/oder
dass die Ansteuerelektronik (104) mehrere Konstantstromregier (120) aufweist, die eingangsseitig und vorzugsweise lastseitig elektrisch leitend verbunden sind; und/oder
dass mehrere Lastschleifen jeweils mit einem Konstantstromregler (120) in Reihenschaltung mit mehreren Leuchtdioden (11) vorgesehen sind; und/oder dass die Lastschleife über einen Widerstand (124) mit dem Gleichrichter (118) verbunden ist.

8. Leuchte mit einer Leuchtstofflampenfassung (23), mit einer in die Leuchtstofflampenfassung (23) einsetzbaren LED-Leuchtröhre (2), die mehrere Leuchtdioden (11) aufweist, mit einem Vorschaltmittel (4) zur Strombegrenzung und mit einem Starterersatzmittel (12),
**dadurch gekennzeichnet,**
**dass** das Starterersatzmittel (12) gemäß einem der voranstehenden Ansprüche ausgebildet ist und/oder Teil einer Ansteuerelektronik gemäß Anspruch 6 oder 7 bildet.

9. Leuchte gemäß Anspruch 8, **dadurch gekennzeichnet, dass** die LED-Leuchtröhre (2) mindestens eine erste Platine (19"), die die Leuchtdioden (11) trägt, aufweist, und/oder
dass die LED-Leuchtröhre (2) zumindest einen Teil einer Ansteuerelektronik (104) zur Versorgung der Leuchtdioden (11) aufweist; vorzugsweise wobei die LED-Leuchtröhre (2) ein Anschlussmittel (105) zum Anschluss der Ansteuerelektronik an Netzspannung aufweist, vorzugsweise wobei die erste Platine (19") die Ansteuerelektronik (104) oder zumindest wesentliche Teile der Ansteuerelektronik (104) trägt, wobei vorzugsweise die Ansteuerelektronik (104) ausgangsseitig ausschließlich mit nicht-elektrolytischen Kondensatoren (123) aufgebaut ist; und/oder dass die LED-Leuchtröhre (2) kabelfrei ausgebildet ist; und/oder dass die LED-Leuchtröhre (2) ein vorzugsweise röhrenförmiges Gehäuse und/oder eine Abdeckung des Gehäuses aus Kunststoff, insbesondere aus Polymethylmethacrylat, aufweist.

10. Kit (K) mit mindestens einer in eine Leuchtstofflampenfassung (23) einsetzbaren LED-Leuchtröhre (2), die mehrere Leuchtdioden (11) aufweist, und mit mindestens einem, vorzugsweise mindestens zwei, Starterersatzmitteln (12) ausgebildet zum Einsatz in der Leuchtstofflampenfassung (23), wobei die Starterersatzmittel (12) zu unterschiedlicher Einstellung der elektrischen Leistung, insbesondere der Eingangsleistungsaufnahme, der LED-Leuchtröhre (2) ausgebildet sind.

11. Kit gemäß Anspruch 10, **dadurch gekennzeichnet, dass** mindestens eines der Starterersatzmittel (12) gemäß einem der Ansprüche 1 bis 9 ausgebildet ist; und/oder
dass die Starterersatzmittel (12) vorzugsweise ausschließlich nicht-elektrolytische Kondensatoren (18) mit unterschiedlichen Werten und/oder mit zwischen Kontaktstiften (15) unterschiedliche Kapazitätswerten aufweisen.

12. Kit gemäß einem der Ansprüche 10 oder 11, **dadurch gekennzeichnet, dass** die Leuchtdioden (11) über eine Ansteuerelektronik (104) versorgt werden, die zu einem Teil in der LED-Leuchtröhre (2), zu einem anderen Teil in dem Starterersatzmittel (12) angeordnet ist, so dass die Eigenschaften der Ansteuerelektronik (104), vorzugsweise in Bezug auf die Steuerung der elektrischen Leistung der LED-Leuchtröhre (2), durch die Wahl eines der unterschiedlichen Starterersatzmittel (12) einstellbar ist.

13. Kit gemäß einem der Ansprüche 10 bis 12, **dadurch gekennzeichnet, dass** die unterschiedlichen Starterersatzmittel (12) unterschiedlich bevorzugt durch unterschiedlich farbige Kennzeichnungsmittel gekennzeichnet sind, vorzugsweise durch eine zumindest im Wesentlichen farbige Gehäuseaußenseite.

14. Kit gemäß Anspruch 13, **dadurch gekennzeichnet, dass** ein Starterersatzmittel (12) des Kits, das bei Einsatz mit der Leuchtröhre zu der höchsten Leistungsaufnahme im Vergleich zu Leistungsaufnahmen bei Einsatz der Leuchtröhre mit anderen der im Kit (K) enthaltenden Starterersatzmittel führt, rot gekennzeichnet ist; und/oder
dass ein Starterersatzmittel (12) des Kits, das bei Einsatz mit der Leuchtröhre zu der geringsten Leistungsaufnahme im Vergleich zu Leistungsaufnahmen bei Einsatz der Leuchtröhre mit anderen der im Kit (K) enthaltenen Starterersatzmittel führt, grün gekennzeichnet ist; und/oder
dass ein Starterersatzmittel (12) des Kits, das bei Einsatz mit der Leuchtröhre zu der zweithöchsten Leistungsaufnahme im Vergleich zu Leistungsaufnahmen bei Einsatz der Leuchtröhre mit anderen der im Kit (K) enthaltenen Starterersatzmittel führt, orange gekennzeichnet ist; und/oder
dass ein Starterersatzmittel (12) des Kits, das bei Einsatz mit der Leuchtröhre zu der zweitniedrigsten Leistungsaufnahme im Vergleich zu Leistungsaufnahmen bei Einsatz der Leuchtröhre mit anderen der im Kit (K) enthaltenen Starterersatzmittel führt, blau gekennzeichnet ist.

15. Verwendung eines Starterersatzmittels (12) gemäß einem der Ansprüche 1 bis 5 und/oder eines Kits (K) gemäß einem der Ansprüche 10 bis 14 zur Einstellung der elektrischen Leistung, insbesondere der Eingangsleistungsaufnahme, einer LED-Leuchtröhre (2).
